# EUROPÄISCHE PATENTSCHRIFT

(11) **EP 4 196 451 B1**
(45) Veröffentlichungstag und Bekanntmachung des Hinweises auf die Patenterteilung: **12.06.2024**
(21) Anmeldenummer: 21819359.7
(22) Anmeldetag: 19.11.2021
(51) Int. Cl.: C04B 28/02, C04B 28/04, C04B 28/06, C04B 28/12, C04B 28/14, C04B 111/28

(54) **WÄRMEDÄMMPUTZSYSTEM UND VERFAHREN ZU DESSEN HERSTELLUNG**
HEAT-INSULATING PLASTER SYSTEM AND METHOD FOR PRODUCING SAME
SYSTÈME DE PLÂTRE THERMO-ISOLANT ET SON PROCÉDÉ DE PRODUCTION

(30) Priorität: 20.11.2020 DE 102020214655
(43) Veröffentlichungstag der Anmeldung: 21.06.2023
(73) Patentinhaber: Franken Maxit Mauermörtel GmbH & Co., 95359 Kasendorf (DE)
(72) Erfinder: SCHARFE, Friedbert Anton, 95359 Kasendorf (DE); GROPPWEIS, Sebastian Stephan, 95359 Kasendorf (DE); ROSIN, Andreas, 95447 Bayreuth (DE); ZELDER, Stefan, 95447 Bayreuth (DE); GERDES, Thorsten, 95488 Eckersdorf (DE)
(74) Vertreter: Dr. Solf & Zapf Patent- und Rechtsanwalts PartG mbB
(86) Internationale Anmeldenummer: PCT/EP2021/082342
(87) Internationale Veröffentlichungsnummer: WO 2022/106641

(56) Entgegenhaltungen:
- EP-A1- 1 035 087
- EP-A1- 3 263 301
- WO-A2-2019/197658
- CN-A- 108 191 370
- CN-A- 108 529 990
- CN-A- 108 640 619
- CN-A- 110 194 624
- DE-A1- 10 327 347
- DE-T5-112017 005 550
- DE-U1-202019 103 866

## Beschreibung

Die vorliegende Erfindung betrifft ein mineralisches Wärmedämmputzsystem sowie ein Verfahren zu dessen Herstellung.

Putze sind in der DIN EN 998-1 :2016 genormt. Sie bilden bekanntermaßen einen Belag auf Außen- oder Innenwänden oder Decken eines Gebäudes. Sie werden hergestellt aus einem mineralischen Putzmörtel, bestehend aus zumindest einem mineralischen Bindemittel, zumindest einem Zuschlagstoff und/oder zumindest einem Zusatzstoff und in der Regel zumindest einem Zusatzmittel. Gegebenenfalls können auch zusätzlich Kurzfasern enthalten sein. Der Putzmörtel wird mit Wasser zu einem Frischmörtel angemischt und auf den jeweiligen Untergrund aufgetragen. Neben den mineralischen Putzmörteln mit mineralischem Bindemittel existieren zudem auch Putzmörtel mit organischem Bindemittel.

Zusatzstoffe sind fein verteilte Stoffe, die bestimmte Eigenschaften des Mörtels beeinflussen. Sie beeinflussen vorrangig die Verarbeitbarkeit des Frischmörtels und die Festigkeit und Dichtigkeit des Festmörtels. Im Gegensatz zu Zusatzmitteln ist die Zugabemenge im Allgemeinen so groß, dass sie bei der Stoffraumrechnung zu berücksichtigen ist. Zusatzstoffe dürfen das Erhärten des Zementes sowie die Festigkeit und Dauerhaftigkeit des Mörtels nicht beeinträchtigen. Bei den Zusatzstoffen wird unterschieden zwischen inaktiven (inerten) Zusatzstoffen und aktiven Zusatzstoffen, insbesondere puzzolanischen Zusatzstoffen und latent hydraulischen Zusatzstoffen, und organischen Zusatzstoffen. Inerte Zusatzstoffe reagieren nicht oder höchstens oberflächlich mit dem Bindemittel. Im Rahmen der Erfindung werden die aktiven Zusatzstoffe dem Bindemittelanteil zugerechnet, sofern sie zur Ausbildung der Bindemittelmatrix beitragen. Zusatzstoffe sind z.B. in der DIN EN 12620:2015-07 "Natürliche Gesteinsmehle" oder der DIN EN 15167-1 :2006-12 "Hüttensandmehl zur Verwendung in Beton, Mörtel und Einpressmörtel" genormt.

Zuschlagstoffe sind ebenfalls inert und deutlich gröber als Zusatzstoffe.

Zusatzmittel werden dem Trockenmörtel zugesetzt, um durch chemische oder physikalische Wirkung oder durch beides die Eigenschaften des Frisch- oder Festmörtels - wie z.B. Verarbeitbarkeit, Erstarren, Erhärten oder Frostwiderstand - zu beeinflussen. Zusatzmittel werden in so geringen Mengen zugegeben (< 5 M.-% des Zementanteils), dass sie als Raumanteil des Mörtels ohne Bedeutung sind. Zusatzmittel werden flüssig, pulverförmig oder als Granulat geliefert. In Trockenmörtelmischungen sind sie pulverförmig oder als Granulat enthalten. Zusatzmittel für Mörtel sind z.B. in der DIN EN 934-2:2012-08 "Zusatzmittel für Beton, Mörtel und Einpressmörtel" genormt.

Putze werden meist in mehreren aufeinander abgestimmten Putzlagen aufgetragen, die zusammen ein Putzsystem bilden. Der Aufbau eines Putzsystems richtet sich nach den Anforderungen an das Putzsystem und nach der Beschaffenheit des Untergrundes. Als Putzsystem werden die Lagen eines Putzes bezeichnet, die in ihrer Gesamtheit und in Wechselwirkung mit dem Putzgrund die Anforderungen an den Putz erfüllen. Eine Putzlage wird in einem Arbeitsgang durch eine oder mehrere Schichten des gleichen Mörtels (nass in nass) hergestellt. Untere Lagen werden in der Regel Unterputz, die oberste Lage wird Oberputz genannt. Der Unterputz dient somit als Haftgrund auf dem Mauerwerksmaterial und als Putzgrund für den darauf angeordneten Putz, z.B. den Oberputz.

Ein Wärmedämmputzsystem besteht z.B. in der Regel aus einem wärmedämmenden Unterputz (Wärmedämmputz) und einem mineralischen Oberputz, der das System vor Wasser und Witterungseinflüssen schützt. Gegebenenfalls weist ein Wärmedämmputzsystem zudem als Zwischenlage einen Armierungsputz mit Gewebeeinlage auf. Wärmedämmputzsysteme werden z.B. zur Fassadendämmung eingesetzt.

Wärmedämmputze werden aus einem Wärmedämmputzmörtel hergestellt. Bei einem Wärmedämmputzmörtel handelt es sich um einen Putzmörtel mit einer Wärmeleitfähigkeit gemäß DIN EN 998-1 :2016 ≤ 0,2 W/(m·K) als Rechenwert. Um diesen Wert zu erreichen, weist ein Wärmedämmputzmörtel Leichtzuschläge, z.B. expandiertes Polystyrol (EPS), expandierten Vermiculit, Blähglaskugeln, Glashohlkugeln und/oder expandierten Perlit auf. Ein Wärmedämmputzmörtel muss gleichzeitig mindestens die Baustoffklasse B1 (schwerentflammbar) erfüllen.

Putze werden beispielsweise maschinell oder von Hand aufgetragen. Maschinell wird der Frischmörtel auf der Baustelle mit einer Putzmaschine bzw. Mischmaschine und einer Spritzdüse aufgebracht. Die Putzmaschine bzw. Mischmaschine ist dazu z.B. an zumindest ein eine Trockenmörtelmischung enthaltendes Bausilo bzw. Trockenmörtelsilo montiert.

Des Weiteren sind auf dem Fachgebiet spritzbare Dämmungen bzw. Spritzdämmungen bzw. gespritzte Dämmungen bekannt. Anstelle der herkömmlich verwendeten Dämmplatten wird eine Wärmedämmschicht aus mit Wasser angemischtem Wärmedämmputzmörtel auf den jeweiligen Untergrund aufgespritzt. Auf den Untergrund wird allerdings zuerst eine Haftbrücke aufbracht. Bei der Herstellung der Wärmedämmschicht wird mehrschichtig "frisch in frisch" gearbeitet, also in direkt aufeinanderfolgenden Arbeitsgängen bis zur gewünschten Schichtstärke mehrere Schichten Wärmedämmfrischmörtel aufgespritzt. Das Aufspritzen erfolgt in an sich bekannter Weise mittels einer Putzmaschine. Der Vorteil von spritzbaren Dämmungen liegt insbesondere darin, dass sie auch auf unebenen Untergrund aufgetragen werden können und die Schichtdicke einfach variiert werden kann.

Die aufgespritzte Wärmedämmschicht, insbesondere die aufgetragenen Frischmörtelschichten, erhärtet/erhärten dann nach dem Aufspritzen in an sich bekannter Weise, durch Erhärten des oder der Bindemittel. Es bildet sich eine Bindemittelmatrix, in die die Zuschlagstoffe und/oder die inerten Zusatzstoffe eingebettet sind. Handelt es sich bei dem Bindemittel um ein mineralisches hydraulisches Bindemittel, wie zum Beispiel Kalkhydrat, Zement und/oder Gips, erfolgt das Erhärten durch Hydratation. Nachdem die Dämmschicht getrocknet ist, wird in der Regel ein Armierungsgewebe aufgebracht. Dieses wird mithilfe eines Armierungsmörtels verputzt. Darauf wird anschließend ein Oberputz aufgebracht.

Alle diese Schritte erfolgen üblicherweise händisch bzw. halb-maschinell. Neben der schlechten Wiederholbarkeit dieser Arbeitsschritte müssen außerdem Trocknungs- und Erstarrungszeiten der einzelnen Materialzusammensetzungen beachtet werden, weswegen die einzelnen Schichten nicht unmittelbar aufeinander folgend aufgetragen werden können. Der Wärmedämmputz wird bislang mittels Nassspritzverfahren sowohl bei Innen- als auch Außendämmung aufgebracht.

Beim Nassspritzen wird bekanntermaßen Trockenmaterial (Bindemittel, Zuschlagstoffe, Zusatzstoffe und/oder Zusatzmittel) in einer Mischeinheit mit Wasser gemischt, so dass sich eine pastöse, förderbare Masse bildet. Diese Masse wird dann über einen Förderschlauch zu einer Spritzdüse gefördert und mittels dieser aufgetragen. An der Spritzdüse wird gegebenenfalls flüssiges Zusatzmittel zugegeben.

Beim Trockenspritzen wird eine, gegebenenfalls befeuchtete, Trockenmörtelmischung (Bindemittel, Zuschlagstoffe, Zusatzstoffe und/oder trockene Zusatzmittel) über Dünnstromförderung mittels Druckluft-Trockenförderung zur Spritzdüse gefördert und erst kurz davor oder in der Spritzdüse mit Wasser und gegebenenfalls flüssigen Zusatzmitteln benetzt und hydrodynamisch vermengt. Die Durchmischung erfolgt durch Verwirbelung mit Druckluft in der Spritzdüse, durch welche das Material beschleunigt und an die Wand geschleudert wird.

Die DE 20 2019 103 866 U1 offenbart beispielsweise eine werksseitig vorgemischte Trockenputzmischung in Form einer Trockenmörtelmischung (Werk-Trockenmörtel) für eine spritzbare Dämmung, einen die mit Wasser angemachte Trockenputzmischung aufweisenden Frischmörtel, eine aus dem Frischmörtel hergestellte Dämmschicht und ein Verfahren zum Aufbringen einer aus dem Frischmörtel hergestellten Dämmschicht auf einen, insbesondere vertikalen, Untergrund. Die Trockenputzmischung der DE 20 2019 103 866 U1 weist 36 bis 52 M.-%, vorzugsweise 40 bis 47 M.-%, Mikrohohlglaskugeln 1 oder in Summe 36 bis 52 M.-%, vorzugsweise 40 bis 47 M.-%, Mikrohohlglaskugeln (1) und Aerogel, wobei der Anteil an Aerogel in der Trockenputzmischung ≤ 30 M.-%, bevorzugt ≤ 20 M.-%, beträgt, und 40 bis 56 M.-%, vorzugsweise 45 bis 53 M.-% Calciumsulfoaluminatzement auf. Vorzugsweise besteht die Trockenputzmischung zudem zu mindestens 91 M.-%, bevorzugt zu mindestens 94 M.%, besonders bevorzugt zu mindestens 96 M.-%, aus dem Calciumsulfoaluminatzement und den Mikrohohlglaskugeln.

Der Trend der modernen Industrie zu steigender Komplexität der Produkte löst den Bedarf nach neuartigen Werkstoffen mit verbesserten funktionalen Eigenschaften aus, die oft nicht von einem einzigen Werkstoff allein erbracht werden können. Aus diesem Grund existieren Verbundwerkstoffe, welche verschiedenste Materialeigenschaften vereinen und so eine Weiterentwicklung und Verbesserung der Werkstofffunktionalität ermöglichen. Eine spezielle Art der Verbundwerkstoffe sind gradierte Werkstoffe, die sich durch eine kontinuierliche Änderung des Eigenschaftsprofils auszeichnen.

Funktional gradierte Bauteile weisen eine kontinuierliche Eigenschaftsänderung in ihrem Querschnitt auf. Die variierende Eigenschaft kann z.B. die Porosität/Dichte, der Fasergehalt oder das Materialmischungsverhältnis (Legierung/Blend) sein. Durch die Gradierung wird eine höhere Materialeffizienz erreicht, indem die Materialeffizienz den lokalen Anforderungen angepasst wird. Der fließende (gradierte) Phasenübergang beseitigt Schwachstellen wie beispielsweise unterschiedliche thermische Ausdehnungen an den Grenzflächen von Funktionsschichten und ermöglicht so verschiedene funktionale Zonen in einem Bauteil aus einem einzigen Material. Poröse Bereiche verbessern die Wärmedämmung, ein dichtes Gefüge bietet Wasserdichtigkeit und Festigkeit, lokale Faserverstärkungen finden sich in Bereichen erhöhter Beanspruchung.

Die EP 3 263 301 A1 offenbart beispielsweise eine Vorrichtung und ein Verfahren zur Herstellung von Bauteilen mit zumindest einer kontinuierlichen Eigenschaftsänderung. Als Bauteil ist ein Betonbauteil, mineralisch gebundenes Bauteil und/oder mittels Bindemittel zusammengehaltenes Bauteil definiert. Weiterhin wird materialseitig eine kontinuierliche Eigenschaftsänderung im Bauteil realisiert. Diese Eigenschaftsänderung bezieht sich auf das bauphysikalische und/oder tragstrukturelle Anforderungsprofil, wie beispielsweise die Verbesserung der Wärmedämmeigenschaften oder die lokale Anpassung der Porosität. Weiterhin soll durch die Gradierung ein dauerhafter Verbund von Bereichen mit unterschiedlicher Materialzusammensetzung erzielt werden. Hierbei sind auch der Fasergehalt, der Wassergehalt sowie sonstige Zuschläge enthalten. Weiterhin wird ein sortenreines Bauteil angestrebt, vorzugsweise mineralisch. Die Vorrichtung umfasst mindestens zwei Dosierer, wovon mindestens ein Dosierer in der Lage ist, das Material zeitweise veränderlich zu dosieren. Nachdem die Materialien, welche entweder rein oder als Vormischung vorliegen können, dosiert wurden, werden diese gemischt. Hierbei ist eine kontinuierliche Mischung vorgesehen. Das Sprühen erfolgt entweder mittels Nass- oder Trockensprühen. Das Sprühen kann automatisiert mittels Roboter oder Portalsystem erfolgen. Weiterhin umfasst die Vorrichtung der EP 3 263 301 A1 Sensorik sowie Steuerungstechnik, um mittels CAD erzeugte Bauteile automatisiert sprühen zu können. Die Dosierer sind dabei einzeln ansteuerbar. Die Sprüheinrichtung misst mittels Sensoren die Zustandsparameter der gesprühten Schicht wie z.B. Schichtdicke, Geometrie, Position und Abmessungen.

Die CN 108 529 990 A offenbart eine Wärmedämmputzmischung, die beispielsweise Portlandzement, Calciumsulfoaluminatzement, keramische Fasern, Blähglas und Aerogel enthalten kann.

Die WO 2019/197658 A2 offenbart ein mehrschaliges Betonfertigteil, welches mittig eine Wärmedämmschicht aufweist, wobei die Wärmedämmschicht anorganische Füllstoffe ausgewählt aus der Gruppe von vulkanischem Gestein, geblähtem Perlit, geblähtem Vermiculit, Bims, Schaum- und Blähglas, Blähton, Blähschiefer, Tuff, Blähglimmer, Lavakies, Lavasand, Silica-Aerogelen, Silica-Hybridaerogelen und deren Mischungen und mineralische Fasern aufweisen kann.

Die DE 103 27 347 A1 betrifft einen Oberputz mit Mikrohohlglaskugeln. Die DE 103 27 347 A1 offenbart zudem ein Putzsystem mit einem auf einem Kalkzementmörtel basierenden Grundputz, welcher Schaumglas enthalten kann, dem Oberputz mit den Mikrohohlglaskugeln und einem Farbanstrich, welcher ebenfalls Mikrohohlglaskugeln aufweisen kann. In der Oberputzschicht kann ein Armierungsgewebe angeordnet sein.

Aufgabe der vorliegenden Erfindung ist die Bereitstellung eines Wärmedämmputzsystems, das einfach und kostengünstig, insbesondere automatisiert, applizierbar ist, gute mechanische und wärmedämmenden Eigenschaften aufweist und recyclebar ist.

Weitere Aufgabe ist die Bereitstellung eines Verfahrens zur Herstellung des Wärmedämmputzsystems.

Diese Aufgaben werden durch ein Wärmedämmputzsystem mit den Merkmalen von Anspruch 1 und ein Verfahren gemäß Anspruch 14 gelöst. Vorteilhafte Weiterbildungen der Erfindung sind in den sich anschließenden Unteransprüchen gekennzeichnet.

Im Folgenden wird die Erfindung anhand einer Zeichnung beispielhaft näher erläutert. Es zeigen:
- Figur 1:: Stark vereinfacht und schematisch einen Querschnitt durch ein erfindungsgemäßes, auf eine Wand aufgebrachtes Dämmputzsystem
- Figur 2:: Stark vereinfacht und schematisch eine erfindungsgemäß verwendete Spritzputzauftragsvorrichtung
- Figur 3:: Ein Diagramm mit der gradierten Zusammensetzung der zehn Schichten 1-10 des Ausführungsbeispiels

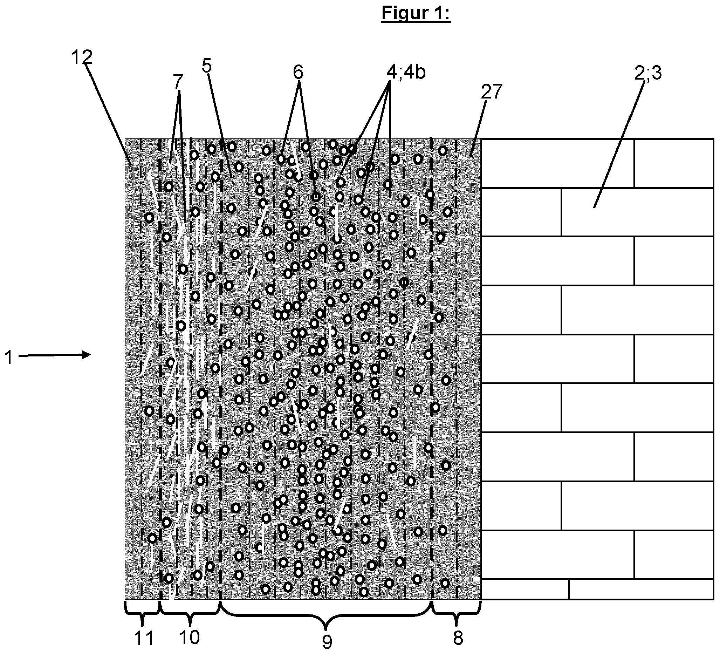

Im Rahmen der Erfindung wurde herausgefunden, dass es möglich ist, ein über seinen Querschnitt gradiertes Wärmedämmputzsystem 1 (Fig. 1) herzustellen, welches hervorragende wärmedämmende und mechanische Eigenschaften aufweist. Das Wärmedämmputzsystem 1 ist schichtweise auf einem Untergrund 2, vorzugsweise einer Wand 3, aufgetragen, und weist somit mehrere aufeinander angeordnete Schichten 4 auf. Die Gradierung wird dabei erfindungsgemäß durch eine Änderung der Zusammensetzung der einzelnen Schichten 4 über den Querschnitt des Wärmedämmputzsystems 1 erreicht.

Die Zusammensetzung umfasst dabei nicht nur die stoffliche Zusammensetzung (Masseanteile), sondern auch das Porenvolumen (offene und geschlossene Porosität) und somit die Dichte.

Das erfindungsgemäße, erhärtete Wärmedämmputzsystem 1 weist in an sich bekannter Weise eine mineralische Bindemittelmatrix 5 aus zumindest einem abgebundenen mineralischen Bindemittel sowie in die Bindemittelmatrix 5 eingebettete Dämmpartikel 6 sowie, bevorzugt anorganische, Kurzfasern 7 auf. Die Bindemittelmatrix 5, die Dämmpartikel 6 sowie die Kurzfasern 7 bilden somit die Grundkomponenten des erfindungsgemäßen Wärmedämmputzsystems 1.

Für die erfindungsgemäße Gradierung wird zumindest der Anteil an zwei der drei Grundkomponenten von Schicht 4 zu Schicht 4 und/oder die Porosität verändert. Das heißt die zueinander benachbarten Schichten 4 weisen jeweils einen unterschiedlichen Anteil an zumindest zwei der drei Grundkomponenten und/oder eine unterschiedliche Porosität bzw. Dichte auf. Direkt aufeinanderfolgende Schichten 4 können dabei aber auch identisch sein, wenn z.B. ein bestimmter Funktionsbereich besonders stark ausgebildet sein soll.

Das erfindungsgemäße Wärmedämmputzsystem 1 wird dabei in an sich bekannter Weise hergestellt durch schichtweises Aufbringen von aus Frischmörtel bestehenden Frischmörtelschichten 4b. Die Frischmörtelschichten 4b werden dabei vorzugsweise frisch auf frisch bzw. nass auf nass aufeinander aufgetragen.

Die unterschiedliche Zusammensetzung der zueinander benachbarten erhärteten Schichten 4 wird dabei durch schichtweise Änderung der Zusammensetzung der Frischmörtelschichten 4b erzielt, aus denen die einzelnen Schichten 4 nach Erhärtung gebildet werden. Dabei wird die unterschiedliche Zusammensetzung insbesondere durch schichtweise Änderung der Zusammensetzung der trockenen Bestandteile der Frischmörtelschichten 4b erzielt.

Die Frischmörtelschichten 4b können sich aber auch im Wassergehalt und/oder Luftporengehalt unterscheiden. Insbesondere die Porosität der Schichten 4 kann z.B. durch eine andere Auftragungsart und/oder einen unterschiedlichen Wassergehalt der Frischmörtelschichten 4b eingestellt und variiert werden.

Die Frischmörtelschichten 4b weisen jeweils zumindest ein mineralisches Bindemittel sowie die Dämmpartikel 6 und/oder die Kurzfasern 7 in unterschiedlichen Anteilen auf, wobei der Anteil an Dämmpartikeln 6 und Kurzfasern auch bei 0 M.-% liegen kann. Die vorgenannten Komponenten bilden die drei trockenen Grundkomponenten der Frischmörtelschichten 4b. Es handelt sich um eine mineralische Bindemittel-Grundkomponente aus zumindest einem mineralischen Bindemittel, eine Dämmpartikel-Grundkomponente aus Mikrohohlglaskugeln oder Mikrohohlglaskugeln und Aerogel, und eine Kurzfaser-Grundkomponente aus Kurzfasern 7. Der Anteil an Grundkomponente(n) bzw. der Gesamtanteil an Grundkomponente(n) in jeder der Frischmörtelschichten 4b beträgt deshalb vorzugsweise ≧ 80 M.-%, bevorzugt ≧ 85 M.-%, besonders bevorzugt ≧ 90 M.-%, ganz besonders bevorzugt ≧ 95 M.-%, bezogen auf die Trockenmasse der Frischmörtelschicht 4b.

Das heißt, jede der Frischmörtelschichten 4b besteht vorzugsweise zu ≧ 80 M.%, bevorzugt zu ≧ 85 M.-%, besonders bevorzugt zu ≧ 90 M.-%, ganz besonders bevorzugt ≧ 95 M.-%, bezogen auf die Trockenmasse der Frischmörtelschicht 4b, aus
a) mineralischem Bindemittel
   oder
b) mineralischem Bindemittel und Kurzfasern (7)
   oder
c) mineralischem Bindemittel und Dämmpartikeln
   oder
d) mineralischem Bindemittel, Dämmpartikeln und Kurzfasern (7)

Die im Rahmen der Erfindung angegebenen Massenanteile der Frischmörtelschichten beziehen sich, sofern nicht anders angegeben, immer auf die Trockenmasse.

Bei dem zumindest einen mineralischen Bindemittel handelt es sich vorzugsweise um Calciumsulfoaluminatzement oder Portlandzement oder Kalkhydrat oder Gips oder ein Puzzolan. Selbstverständlich sind auch Mischungen der vorgenannten Bindemittel möglich.

Besonders bevorzugt weisen die Frischmörtelschichten 4b ausschließlich Calciumsulfoaluminatzement als Bindemittel oder ausschließlich eine Bindemittelmischung aus Gips, Kalkhydrat, Portlandzement und Puzzolan auf. Der Anteil an Calciumsulfoaluminatzement oder der Bindemittelmischung aus Gips, Kalkhydrat, Portlandzement und Puzzolan beträgt somit vorzugsweise 70 bis 100 M.-%, bevorzugt 85 bis 100 M.-%, besonders bevorzugt 95 bis 100 M.-%, bezogen auf den gesamten Bindemittelgehalt (Trockenmasse).

Calciumsulfoaluminatzement (kurz CSA-Zement) ist eine in China entwickelte Zementart. Auf dem Markt erhältlicher Calciumsulfoaluminatzement besteht in der Regel aus Calciumsulfoaluminatklinker und Anreger, z.B. Gips oder Anhydrit. Auf dem Markt erhältlicher Calciumsulfoaluminatzement kann aber auch ausschließlich aus gemahlenem Calciumsulfoaluminatklinker bestehen. Calciumsulfoaluminatklinker wird aus den Rohstoffen Kalkstein, Bauxit und Gips durch Brennen bei ca. 1250-1350°C in einem Drehrohrofen und anschließendes Aufmahlen hergestellt. Calciumsulfoaluminatklinker hat als Hauptkomponente das wasserfreie Sulfat Ye'elimit der Zusammensetzung C₃A₃Cs (Ca₄Al₆O₁₂(SO₄). Daneben koexistieren C₂S (Belit), Gehlenit, Brownmillerit, Ternesit, Spinell und weitere Nebenphasen. Bei der Hydratation von Calciumsulfoaluminatzement können sich Ettringit, Monosulfat, Aluminiumhydroxid, CSH-Gel (Calciumsilkathydrat-Gel), Strätlingit und Calciumhydroxid bilden. Werden eisenreiche Rohstoffe verwendet, entsteht ein ferritischer Calciumsulfoaluminatklinker.

Der erfindungsgemäße Calciumsulfoaluminatzement besteht aus Calciumsulfoaluminatklinker und zumindest einer Calciumsulfatkomponente als Anreger für den Calciumsulfoaluminatklinker.

Vorzugsweise handelt es sich bei der Calciumsulfatkomponente um Anhydrit. Es kann sich aber auch um Gips oder Halbhydrat handeln. Der Calciumsulfoaluminatzement kann auch Gemische aus den genannten Calciumsulfatkomponenten aufweisen. Vorzugsweise ist aber ausschließlich Anhydrit enthalten.

Vorzugsweise weist der Calciumsulfoaluminatzement eine Gesamtmenge von 8 bis 22 M.-%, bevorzugt 12 bis 18 M.-%, an Calciumsulfatkomponente auf.

Bei den Dämmpartikeln 6 handelt es sich entweder ausschließlich um Mikrohohlglaskugeln oder um Mikrohohlglaskugeln und Aerogel.

Falls das Dämmputzsystem 1 sowohl Mikrohohlglaskugeln als auch Aerogel aufweist, ist es dabei möglich, dass die einzelnen Schichten 4 sowohl Mikrohohlglaskugeln als auch Aerogel aufweisen. Alternativ dazu weisen die Schichten 4 lediglich Mikrohohlglaskugeln oder Aerogel auf. Beispielsweise ist es möglich, dass lediglich eine einzelne oder einzelne Schicht(en) 4 ausschließlich Dämmpartikel 6 aus Aerogel aufweist, um die Dämmwirkung des Dämmputzsystems 1 zu verbessern, ohne die Schichtstärke erhöhen zu müssen.

Da die Mikrohohlglaskugeln allerdings deutlich kostengünstiger als Aerogel sind, ist der Anteil an Mikrohohlglaskugeln im gesamten Dämmputzsystem 1 vorzugsweise höher als der Anteil an Aerogel. Vorzugsweise beträgt der Anteil an Aerogel ≦ 50 Vol.-%, bevorzugt ≦ 30 Vol.-%, besonders bevorzugt ≦ 10 Vol.-%, bezogen auf die Gesamtmenge an Dämmpartikeln im Dämmputzsystem 1.

Die Mikrohohlglaskugeln sind geschlossenzellig ausgebildet. Sie weisen eine Kugelwandung mit einer geschlossenen Kugeloberfläche auf. Die Kugelwandung umgibt einen Kugelinnenraum. Zudem sind die Mikrohohlglaskugeln einzellig ausgebildet. Das heißt, der Kugelinnenraum ist nicht in mehrere Zellen unterteilt, sondern einzellig ausgebildet.

Des Weiteren bestehen die Mikrohohlglaskugeln vorzugsweise aus Borsilikatglas oder Kalknatronglas (Recyclingglas). Bevorzugt bestehen sie aber aus Borsilikatglas.

Vorzugsweise weisen die Mikrohohlglaskugeln zudem einen mittleren Teilchendurchmesser d₅₀ von 45 bis 60 µm, bevorzugt von 50 bis 55 µm, und/oder einen d₉₀-Wert von 70 bis 105 µm, bevorzugt von 75 bis 85 µm, bestimmt jeweils gemäß ISO 13320:2009-10 mittels Lasergranulometrie, auf. Der dₓ-Wert gibt an, dass x [Vol.-%] der Teilchen einen Durchmesser kleiner als den angegeben Wert aufweisen.

Vorzugsweise weisen die Mikrohohlglaskugeln zudem einen maximalen Teilchendurchmesser, bestimmt gemäß ISO 13320:2009-10 mittels Lasergranulometrie, von ≤ 115 µm auf.

Für die Bestimmung der Teilchengrößen wird vorzugsweise das Gerät CILAS 1064 nass verwendet.

Dabei weisen vorzugsweise die trockenen Bestandteile der Frischmörtelschichten 4b (ohne die Kurzfasern 7), eine maximale Korngröße ≤ 0,6 mm, bevorzugt ≤ 0,4 mm, besonders bevorzugt ≤ 0,2 mm, auf.

Vorzugsweise weisen die Mikrohohlglaskugeln außerdem eine Schüttdichte gemäß DIN EN 459-2:2010-12, von 0,06 bis 0,1 g/cm³, bevorzugt von 0,07 bis 0,08 g/cm³, auf.

Vorzugsweise weisen die Mikrohohlglaskugeln zudem eine Nenndichte (Teilchendichte) bestimmt mittels Pyknometer mit der Testmethode QCM 14.24.1 der Firma 3M von 0,13 bis 0,17 g/cm³, bevorzugt von 0,14 bis 0,16 g/cm³, auf.

Des Weiteren weist das Aerogel vorzugsweise einen mittleren Teilchendurchmesser d₅₀ von 7 bis 11 µm, bestimmt jeweils gemäß ISO 13320:2009-10 mittels Lasergranulometrie, auf.

Das Aerogel weist also einen kleineren Teilchendurchmesser als die Mikrohohlglaskugeln auf und kann deshalb auch das Lückenvolumen zwischen den Mikrohohlglaskugeln füllen.

Vorzugsweise weist das Aerogel außerdem eine Schüttdichte gemäß DIN EN 459-2:2010-12 von 30 bis 45 kg/m³ auf.

Die Kurzfasern 7 weisen vorzugsweise einen Durchmesser von 7 bis 20 µm, bevorzugt von 7 bis 11 µm, und/oder eine Länge von 1 bis 30 mm, bevorzugt von 4 bis 8 mm, auf. Dabei kann die Faserlänge und/oder Faserdicke in den einzelnen Schichten 4 auch unterschiedlich sein, worauf weiter unten näher eingegangen wird.

Bei den Kurzfasern 7 handelt es sich zudem, wie bereits erläutert, vorzugsweise um anorganische Kurzfasern 7. Besonders bevorzugt handelt es sich um Glasfasern. Es kann sich aber auch um andere mineralische Kurzfasern, bevorzugt Basaltfasern, und/oder um andere anorganische Kurzfasern, vorzugsweise Carbonfasern, und/oder metallische Kurzfasern 7 handeln. Zudem kann es sich auch um organische Polymerfasern und/oder Naturfasern handeln. Die anorganischen Kurzfasern 7 und insbesondere die Glasfasern sind aber auch aus Gründen des Recyclings bevorzugt.

Besonders bevorzugt handelt es sich insbesondere aufgrund der Recylierbarkeit um Glasfasern, vorzugsweise um Glasfasern der Typen E, C, S, R, HM oder AR.

Die Frischmörtelschichten 4b können zudem zusätzlich zu den drei trockenen Grundkomponenten noch weitere trockene und/oder flüssige Bestandteile aufweisen. Bei den anderen Bestandteilen handelt es sich um Zusatzmittel und/oder inerte Zusatzstoffe und/oder Zuschlagstoffe.

Bevorzugt weisen die Frischmörtelschichten 4b zumindest ein trockenes oder flüssiges Zusatzmittel auf.

Sie können zudem auch zumindest einen inerten Zusatzstoff und/oder zumindest einen Zuschlagstoff aufweisen. Beispielsweise kann es sich bei dem Zuschlagstoff um Sand oder vorzugsweise einen Leichtzuschlagstoff handeln.

Bevorzugt sind aber zusätzlich zu den drei trockenen Grundkomponenten keine Zuschlagstoffe und/oder keine Zusatzstoffe enthalten.

Der Anteil an den weiteren Bestandteilen in Form der Zusatzmittel, Zusatzstoffe und/oder Zuschlagstoffe beträgt aber ≦ 20 M.-%, vorzugsweise ≦ 15 M.-%, bevorzugt ≦ 10 M.-%, besonders bevorzugt ≦ 5 M.-%, bezogen auf die Trockenmasse der Frischmörtelschichten 4b.Vorzugsweise weisen die Frischmörtelschichten zumindest einen Luftporenbildner und/oder zumindest ein Wasserretentionsmittel, z.B. Methylcellulose, und/oder zumindest ein Verdickungsmittel und/oder zumindest ein Dispersionspulver und/oder zumindest ein Hydrophobierungsmittel und/oder zumindest einen Erstarrungsregler und/oder zumindest ein Dispergierhilfsmittel und/oder zumindest ein Fließmittel als Zusatzmittel auf.

Das erfindungsgemäße Dämmputzsystem 1 weist aufgrund der Gradierung unterschiedliche Funktionsbereiche bzw. Funktionslagen bzw. Funktionszonen 8-11 auf, welche jeweils bestimmte Funktionen des Dämmputzsystems 1 erfüllen und jeweils aus einer oder mehreren Schichten 4 bestehen. Die Schichten 4 können dabei auch unterschiedlich dick sein. Dies gilt auch für die Schichten 4 eines Funktionsbereichs 8-11.

Vorzugsweise weist das Dämmputzsystem 1 vom Untergrund 2 aus gesehen zunächst einen Unterputz bzw. Unterputzbereich 8, darauffolgend einen Wärmedämmputz bzw. Wärmedämmputzbereich 9, darauffolgend einen Armierungsputz bzw. Armierungsputzbereich 10 und abschließend einen Oberputz bzw. Oberputzbereich 11 auf.

Der Unterputz 8 ist direkt auf dem Untergrund 2 angeordnet. Einerseits dient der Unterputz 8 somit zur direkten Haftung des Unterputz 8 am Untergrund 2. Die direkt auf den Untergrund 2 aufgetragene Schicht 4 des Unterputzes 8, also die erste Schicht 4 des Dämmputzsystems 1, bildet somit eine Haftschicht 27. Zudem dient der Unterputz 8, falls notwendig, dazu, Unebenheiten im Untergrund 2 auszugleichen und somit eine ebene Oberfläche für den sich an den Unterputz 8 anschließenden Wärmedämmputz 9 zu bilden. Er dient somit als Haftgrund für den Wärmedämmputz 9 und bildet eine Haftbrücke zwischen dem Untergrund 2 und dem Wärmedämmputz 9.

Je nach Anwendungszweck und Untergrund 2 ist der Unterputz 8 somit einschichtig oder mehrschichtig ausgebildet.

Die Zusammensetzung des Unterputzes 8 ist somit immer auf den jeweiligen Untergrund 2 abgestimmt und muss beispielsweise zu dessen Saugverhalten passen. Da der Unterputz 8 in der Regel auch die Funktion hat, klimatisch bedingte Spannungen aufgrund von Temperaturschwankungen Untergrund 2 abzupuffern, soll der Unterputz 8 zumindest eine gewisse Elastizität aufweisen. Infolgedessen weisen die Schichte(n) 4 des Unterputzes 8 vorzugsweise einen hohen Anteil an Bindemittelmatrix und einen geringen Anteil an in die Bindemittelmatrix 5 eingebetteten Mikrohohlglaskugeln und/oder Kurzfasern 7 auf. Der Anteil an Bindemittelmatrix ist somit deutlich höher als der Anteil an Mikrohohlglaskugeln und/oder Kurzfasern 7 zusammen genommen.

Die Kurzfasern 7 sind zudem in den Schichte(n) 4 des Unterputzes 8 ungeordnet bzw. statistisch verteilt. Dadurch dienen sie als räumliche Verstärkung und verbessern die innere Festigkeit.

Vorzugsweise weist der Frischmörtel, welche zur Herstellung der Haftschicht 27 verwendet wird, einen Bindemittelanteil von 60 bis 100 M.-%, bevorzugt von 60 bis 95 M.-%, besonders bevorzugt von 75 bis 90 M.-%, auf, bezogen auf die Trockenmasse des Frischmörtels.

Und/oder der Anteil an Dämmpartikeln 6 in dem Frischmörtel beträgt vorzugsweise ≦ 10 M.-%.

Der Anteil an Kurzfasern 7 in dem Frischmörtel beträgt zudem vorzugsweise ≦ ≦ 2 M.-%. Der Anteil an Kurzfasern 7 hängt dabei in an sich bekannter Weise auch immer von der Dichte der verwendeten Kurzfasern 7 ab.

Die Haftschicht 27 weist zudem vorzugsweise eine Schichtdicke von 0,3 bis 10 mm, bevorzugt 1 bis 6 mm, auf.

Wie bereits erläutert, schließt sich an den Unterputz 8 zudem der Wärmedämmputz 9 an, welcher vorzugsweise aus mehreren Schichten 4 besteht.

In dem Wärmedämmputz 9 nimmt, ausgehend vom Untergrund 2 bzw. ausgehend vom Unterputz 8, der Anteil an Dämmpartikeln 6 in den einzelnen Schichten 4 zunächst immer mehr zu. Der Bindematrixanteil wird entsprechend niedriger. Insbesondere wird der Anteil an Dämmpartikeln 6 bis auf einen Anteil von 30 bis 70 M.-%, bezogen auf die Trockenmasse der Frischmörtelschichten 4b gesteigert.

Die Schicht(en) 4 des Wärmedämmputzes 9 können zudem auch Kurzfasern 7 enthalten. Die Kurzfasern 7 sind zudem in den Schichte(n) 4 des Wärmedämmputzes 9 ungeordnet bzw. statistisch verteilt. Dadurch dienen sie wiederum als räumliche Verstärkung und verbessern die innere Festigkeit. Der Anteil an Kurzfasern 7 in dem Frischmörtel für die Schichte(n) 4 des Wärmedämmputzes 9 beträgt dabei vorzugsweise ≦ 5 M.-%. Der Anteil an Kurzfasern 7 kann dabei von Schicht 4 zu Schicht 4 variieren oder gleich sein. Die Gradierung in dem Wärmedämmputz 9 erfolgt durch Variation des Anteils an Dämmpartikeln 6 und Bindemittelmatrix 5, wie oben beschrieben. Der Anteil an Kurzfasern 7 spielt eine untergeordnete Rolle.

Nach Erreichen des Maximalwertes nimmt der Anteil an Dämmpartikeln 6 in den einzelnen Schichten 4 des Wärmedämmputzes 9 wieder sukzessive ab. Der Bindematrixanteil wird entsprechend wieder höher.

Vorzugsweise besteht der Wärmedämmputz 9 aus 1 bis 35 Schichten 4.

Die einzelnen Schichten 4 des Wärmedämmputzes 9 weisen zudem vorzugsweise eine Schichtdicke von 4 bis 60 mm auf. Sie können dabei selbstverständlich auch unterschiedlich dick sein.

An den Wärmedämmputz 9 schließt sich, wie bereits erläutert, der Armierungsputz 10 an, welcher ebenfalls vorzugsweise aus mehreren Schichten 4 besteht.

In den Schichten 4 des Armierungsputzes 10 nimmt, ausgehend vom Untergrund 2 bzw. ausgehend vom Wärmedämmputz 9, der Anteil an Dämmpartikeln 6 in den einzelnen Schichten 4 weiter ab und der Anteil an Kurzfasern 7 nimmt zu. Insbesondere wird der Anteil an Kurzfasern 7 in den Frischmörtelschichten 4b bis auf einen Anteil von 5 bis 50 M.-%, bevorzugt 10 bis 40 M.-%, bezogen auf die Trockenmasse der Frischmörtelschicht 4b, gesteigert. Der massenbezogene Anteil an Kurzfasern 7 hängt dabei, wie bereits erläutert, auch von der Dichte der Kurzfasern 7 ab.

Dabei enthalten die Schichte(n) 4 des Armierungsputzes 10 vorzugsweise ausschließlich in der Auftragsebene ausgerichtete Kurzfasern 7 und keine ungeordneten bzw. statistisch verteilen Kurzfasern 7. Die ausgerichteten Kurzfasern 7 des Armierungsputzes 10 sind länger als die statistisch verteilten Kurzfasern 7 in den anderen Putzen 8;9; 11. Es können aber auch statistisch verteilte Kurzfasern 7 enthalten sein. Deren Anteil ist aber geringer als der Anteil an ausgerichteten Kurzfasern 7 und beträgt vorzugsweise ≦ 5 M.-%, bevorzugt ≦ 4 M.%.

Zusätzlich zum Faseranteil steigt auch der Anteil an Bindemittelmatrix 5 in den einzelnen Schichten 4 des Armierungsputzes 10 an.

Und der Anteil an Dämmpartikeln 6 wird sukzessive bis auf einen Anteil von vorzugsweise 0 bis 12 M.-%, bezogen auf die Trockenmasse der Frischmörtelschicht 4b, gesenkt.

Vorzugsweise besteht der Armierungsputz 10 aus 1 bis 4 Schichten 4.

Die einzelnen Schichten 4;4b des Armierungsputzes 10 weisen zudem vorzugsweise eine Schichtdicke von 2 bis 15 mm auf.

Insbesondere ist die Dicke der einzelnen Schichte(n) 4;4b des Armierungsputzes 10 geringer als die Länge der Kurzfasern 7. Aufgrund dessen und aufgrund der weiter unten beschriebenen Auftragungsart sind die Kurzfasern 7 gerichtet und größtenteils parallel zum Untergrund 2 angeordnet (Fig. 1) und gewährleisten dadurch die gewünschte Armierung, welche bei einem herkömmlichen Armierungsputz durch ein eingelegtes Gewebe realisiert wird. Die Kurzfasern 7 sind im Armierungsputz 10 somit ausgerichtet und nicht ungeordnet. Sie sind parallel zum Untergrund 2 ausgerichtet und in den jeweiligen Schichten 4 jeweils im Wesentlichen zueinander parallel ausgerichtet (=unidirektional). Die Ausrichtung schließt dabei selbstverständlich mit ein, dass auch einige Kurzfasern 7 ungeordnet sind. Die Kurzfasern 7 sind selbstverständlich auch nicht alle zueinander parallel angeordnet, eine Ausrichtung bzw. Vorzugsrichtung ist aber deutlich erkennbar.

Dabei können die Kurzfasern 7 von zueinander benachbarten Schichten 4 gleich oder unterschiedlich ausgerichtet sein. Beispielsweise können sie zueinander senkrecht oder in einem anderen Winkel zueinander ausgerichtet sein. Dadurch kann die Armierungswirkung sehr gezielt und anwendungsspezifisch eingestellt werden.

An den Armierungsputz 10 schließt sich, wie bereits erläutert, der Oberputz 11 an, welcher vorzugsweise lediglich aus einer einzigen Schicht 4 besteht. Der Oberputz 11 bzw. dessen letzte Schicht 4 bildet in an sich bekannter Weise den Abschluss bzw. eine Deckschicht 12 des Dämmputzsystems 1.

Die Deckschicht 12 des Oberputzes 11 weist weder Dämmpartikel 6 noch Kurzfasern 7 oder nur geringe Anteile davon auf.

Der Anteil an Dämmpartikeln 6 in der Deckschicht 12 beträgt vorzugsweise ≦ 4 M.-%, bevorzugt ≦ 3 M.-%, bezogen auf die Trockenmasse der Frischmörtelschicht 4b.

Und der Anteil an Kurzfasern 7 in der Deckschicht 12 beträgt vorzugsweise ≦ 5 M.-%, bezogen auf die Trockenmasse der Frischmörtelschicht 4b. Falls vorhanden, sind die Kurzfasern 7 zudem ungeordnet.

Des Weiteren können in an sich bekannter Weise auf die noch feuchte Deckschicht 12 aus funktionalen und/oder dekorativen Gründen zusätzlich mineralische Partikel, z.B. Feinkies oder Splitt, aufgebracht werden.

Im Folgenden wird nun auf die bevorzugte Herstellung des erfindungsgemäßen Wärmedämmputzsystems 1 eingegangen:
Das Auftragen der einzelnen Frischmörtelschichten 4b des erfindungsgemäßen Dämmputzsystems 1 erfolgt nämlich vorzugsweise durch Spritzen, vorzugsweise mittels Trockenspritzen, in einer Spritzputzauftragsvorrichtung 13. Sie kann aber auch durch Nassspritzen erfolgen.

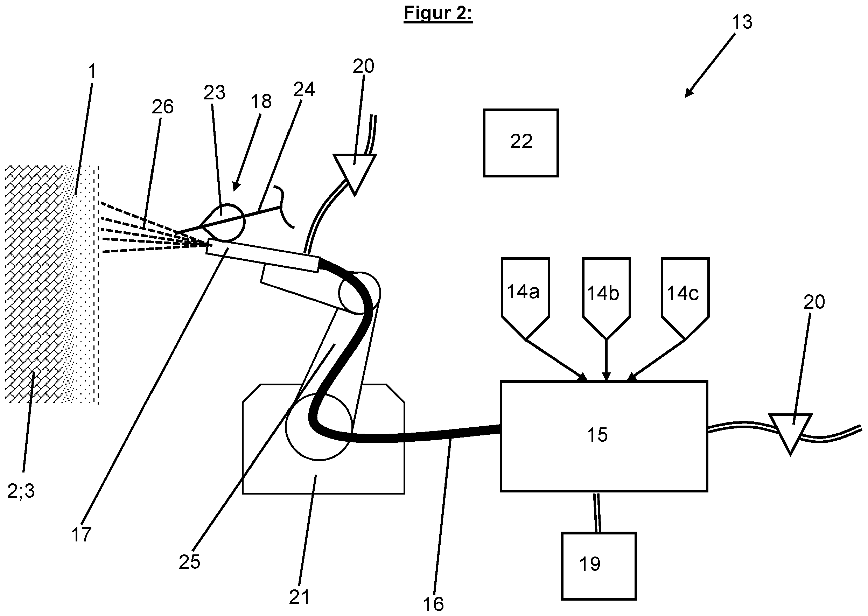

Die für das erfindungsgemäße Herstellungsverfahren vorzugsweise verwendete Spritzputzauftragsvorrichtung 13 (Fig. 2) weist zumindest zwei, bevorzugt drei, Trockenmaterialvorratsbehälter 14a-c, eine Mischeinrichtung 15, eine Förderleitung 16, eine Spritzdüse 17, vorzugsweise eine Faserzugabeeinrichtung 18, eine Druckluftquelle 19 zur Bereitstellung von Förderluft und mindestens einen Wasseranschluss 20 zur Zuführung von Anmachwasser sowie vorzugsweise einen Roboter 21 und eine Steuereinrichtung 22 auf.

Die Trockenmaterialvorratsbehälter 14a-c sind vorzugsweise jeweils mit unterschiedlichen trockenen Vormischungen aus den drei trockenen Grundkomponenten befüllt, wobei als Dämmpartikel im vorliegenden Fall ausschließlich Mikrohohlglaskugeln verwendet werden.

Beispielsweise enthält der erste Trockenmaterialvorratsbehälter 14a eine Bindemittel-Vormischung, welche hauptsächlich (> 50M.-%) aus Bindemittel besteht und geringeren Anteile an Mikrohohlglaskugeln und Kurzfasern 7 aufweist. Der zweite Trockenmaterialvorratsbehälter 14b enthält eine Hohlglaskugel-Vormischung, welche hauptsächlich aus Mikrohohlglaskugeln besteht und geringe Anteile an Bindemittel und Kurzfasern 7 aufweist. Und der dritte Trockenmaterialvorratsbehälter 14c enthält eine Faser-Vormischung, welche hauptsächlich aus Kurzfasern 7 besteht und geringe Anteile an Bindemittel und Mikrohohlglaskugeln 6 aufweist.

Vorzugsweise weisen die trockenen Vormischungen zudem jeweils zumindest ein Zusatzmittel auf, vorzugsweise zumindest einen Luftporenbildner und/oder zumindest ein Wasserretentionsmittel, z.B. Methylcellulose, und/oder zumindest ein Verdickungsmittel und/oder zumindest ein Dispersionspulver und/oder zumindest ein Hydrophobierungsmittel und/oder zumindest einen Erstarrungsregler und/oder zumindest ein Dispergierhilfsmittel und/oder zumindest ein Fließmittel.

Die drei Trockenmaterialvorratsbehälter 14a-c sind mit der Mischeinrichtung 15 verbunden. In der Mischeinrichtung 15 werden die Vormischungen der einzelnen Trockenmaterialvorratsbehälter 14a-c miteinander gemischt. Die Zusammensetzung der Mischung bzw. die Anteile der einzelnen Vormischungen in der Gesamtmischung wird dabei für jede der aufzubringenden Frischmörtelschichten 4b entsprechend eingestellt. Die Dosierung der einzelnen Vormischungen erfolgt vorzugsweise durch an sich bekannte Dosiermittel, z.B. Schneckendosierer oder Zellradschleusen.

Beim Nassspritzverfahren werden die Vormischungen in der Mischeinrichtung 15 zudem mit Wasser zu einem pastösen, förderbaren Frischmörtel gemischt. Beim Trockenspritzverfahren werden die Vormischungen in der Mischeinrichtung 15 zu einer Trockenmörtelmischung vermischt, welche gegebenenfalls leicht vorbefeuchtet bzw. vorbenetzt wird.

Das Zusammenmischen der Vormischungen mit oder ohne Anmachwasser geschieht entweder über rührwerkslose statische Mischer oder Mischer mit Rührwerk. Scherarme Mischaggregate sind insbesondere bevorzugt, um den Bruch der Mikroglashohlglaskugeln 6 zu minimieren.

Die Trockenmörtelmischung oder der Frischmörtel werden dann mittels der Förderleitung 16 zur Spritzdüse 17 befördert. Während der Förderung wird die Trockenmörtelmischung oder der Frischmörtel weiter vermischt.

Beim Trockenspritzen erfolgt die Förderung mittels Druckluft (Dünnstromförderung). Die Trockenmörtelmischung wird in oder nahe der Spritzdüse 17 mit dem Anmachwasser zum Frischmörtel vermischt und mittels der Spritzdüse 17 auf den Untergrund 2 oder auf die zuvor aufgetragene Frischmörtelschicht 4b aufgespritzt. Das Anmachwasser kann dabei zudem auch zumindest ein Zusatzmittel, beispielsweise einen Abbindebeschleuniger, enthalten. An der Spritzdüse 17 wird dem Frischmörtel in der Regel noch einmal zusätzlich Druckluft zugeführt, um die notwendige Anwurfgeschwindigkeit zu erhalten.

Beim Nassspritzverfahren erfolgt die Förderung ebenfalls vorzugsweise mittels Dünnstromförderung. Sie kann aber auch mittels einer Betonpumpe erfolgen (Dichtstromförderung). Die Dünnstromförderung ist allerdings bevorzugt, da bei Pumpförderung die Scherbelastung in der Frischmörtelmasse mit zunehmender Förderdistanz zum erhöhten Bruch von Mikroglashohlglaskugeln und somit zur reduzierten Dämmwirkung des Wärmedämmputzsystems 1 führt.

Auch beim Nassspritzen wird dem Frischmörtel an der Spritzdüse 17 vorzugsweise Druckluft zugeführt. Des Weiteren wird, insbesondere bei der Dichtstromförderung, vorzugsweise in oder nahe der Spritzdüse 17 ein Abbindebeschleuniger zugegeben.

Bei der Spritzdüse 17 kann es sich zum Beispiel um eine Runddüse oder eine Schlitzdüse oder eine Flachdüse handeln. Zur Anpassung an die unterschiedlichen Mörtelzusammensetzungen beim graduellen Aufbau des Dämmputzsystems 1 kann die Spritzdüse 17 im Laufe des Herstellungsverfahrens auch gewechselt werden.

Wie bereits erläutert, weist die Spritzputzauftragsvorrichtung 13 zudem vorzugsweise die Faserzugabeeinrichtung 18 auf. Die Faserzugabeeinrichtung 18 dient zur zusätzlichen Zugabe von Kurzfasern 7 direkt an der Spritzdüse 17 in den aus der Spritzdüse 17 austretenden Frischmörtelstrahl 26. Hierzu weist die Faserzugabeeinrichtung 18 eine Faserschneideinheit 23 zum Abschneiden der Kurzfasern 7 von einem endlosen Faserbündel 24 auf, welches der Faserschneideinheit 23 kontinuierlich zugeführt wird. Dazu weist die Faserschneideinheit 23 vorzugsweise eine Spule, von der das Faserbündel kontinuierlich abgewickelt wird, Vorschubwalzen zum Vorschub des Faserbündels und somit zur Einstellung der Vorschubgeschwindigkeit und ein kontinuierlich rotierendes Messer auf. Über die Vorschubgeschwindigkeit des Faserbündels und die Rotationsgeschwindigkeit des Messers kann die Faserlänge eingestellt werden. Dadurch, dass das Faserbündel 24 durch die Vorschubwalzen einen Vorschub erfährt, werden die Kurzfasern 7 nach dem Abschneiden in den Frischmörtelstrahl 26 hineingeworfen, mitgerissen und in diesen untergemischt. Zudem werden Sie dadurch, dass die Faserlänge größer ist als die Schichtdicke im Wesentlichen parallel zum Untergrund 2 und im Wesentlichen parallel zur Richtung des Frischmörtelstrahls 26 ausgerichtet. Die Ausrichtung der Kurzfasern 7 kann zusätzlich durch Abziehen der Frischmörtelschicht 4b nach dem Auftragen verbessert werden.

Mit der Faserzugabeeinrichtung 18 können sowohl gerichtete als auch ungerichtete Kurzfasern 7 zugegeben werden. Dies hängt von der Faserlänge ab. Wenn die Kurzfasern 7 kürzer als die Dicke der Frischmörtelschicht 4b sind, verteilen diese sich ungerichtet in drei Dimensionen.

Die Faserzugabeeinrichtung 18 ist vorzugsweise direkt an der Spritzdüse 17 befestigt.

Die Faserzugabeeinrichtung 18 wird insbesondere bei der Erzeugung der Frischmörtelschichten 4b für den Armierungsputz 10 verwendet, welche die gerichteten Kurzfasern 7 aufweisen.

Wie ebenfalls bereits erläutert, weist die Spritzputzauftragsvorrichtung 13 vorzugsweise einen Roboter 21 zur automatisierten Auftragung des Frischmörtels auf. Der Roboter 21 weist vorzugsweise einen mehrachsigen Roboterarm 25 auf, an dessen freien Ende die Spritzdüse 17 befestigt ist. Zudem ist der Roboter 21 vorzugsweise verfahrbar.

Zur Steuerung des gesamten Verfahrens weist die Spritzputzauftragsvorrichtung 13 zudem die Steuereinrichtung 22 auf. Die Steuereinrichtung 22 dient zur Überwachung, Bedienung und Steuerung des automatisierten Auftrags des erfindungsgemäßen Dämmputzsystems 1. Beispielsweise wird hierzu mit Hilfe von Sensoren an der Spritzdüse 17 der Schichtaufbau erfasst und der Fortschritt an die Steuereinrichtung 22 gemeldet und dort gespeichert. Auch wird vorzugsweise der Verbrauch der jeweiligen Vormischungen an die Steuereinrichtung 22 gemeldet und dort zentral gespeichert. Bevor der jeweilige Vorratsbehälter 14a-c geleert ist, kann somit rechtzeitig eine Befüllung oder Austausch des Vorratsbehälter 14a-c erfolgen.

Alternativ zum Auftragen mit dem Roboterarm 25 kann der Roboter 21 auch an einem Portalsystem befestigt sein und mittels diesem in alle drei Raumdichtungen bewegt werden.

Selbstverständlich kann der Auftrag aber auch in an sich bekannter Weise manuell durch eine Bedienperson erfolgen, welche die Spritzdüse 17 über den Untergrund 2 führt.

Der Auftrag der einzelnen Frischmörtelschichten 4b kann dabei auf unterschiedliche Art und Weise erfolgen. Beispielsweise können die Frischmörtelschichten 4b in Bahnen mäanderweise ohne Überlappung aufgetragen werden. Das Auftragen kann aber auch durch mit Überlappung der Auftragsbahnen einer Frischmörtelschicht 4b oder durch kreuzweises Aufspritzen erfolgen, so dass eine möglichst lückenfreie, gleichmäßige Oberfläche der Frischmörtelschichten 4b erzielt wird.

Zur besseren mechanischen Verkrallung der einzelnen ausgehärteten Schichten 4 miteinander, können die Frischmörtelschichten 4b zudem auch strukturiert werden, z.B. mittels einer Zahnkelle oder dergleichen.

Des Weiteren wird die Deckschicht 12 vorzugsweise ohne zusätzliche Druckluftzufuhr an der Spritzdüse 17 aufgetragen, um ein möglichst dichtes Gefüge zu erhalten. Das Aufspritzen erfolgt dann vorzugsweise extrusionsartig.

Zudem wird die Deckschicht 12 vorzugsweise nach dem Auftragen glattgezogen. Das Glattziehen fördert die parallele Ausrichtung der oberflächennahen Kurzfasern 7 und erhöht die mechanische Wirkung des Armierungsputzes 10. Erfolgt das Auftragen mit dem Roboter 21, wird automatisiert ein Werkzeugwechsel durchgeführt. Im Fall eines Mehrachs-Roboters tauscht dieser z.B. die Spritzdüse 17 selbständig gegen eine Abziehleiste. Mit der Abziehleiste wird die Deckschicht 12 automatisiert glattgezogen.

Wie bereits erläutert, können zudem auf die noch feuchte Deckschicht 12 aus funktionalen und/oder dekorativen Gründen zusätzlich mineralische Partikel, z.B. Feinkies oder Splitt, aufgebracht werden.

Vorteil der Erfindung ist, dass der Auftrag des erfindungsgemäßen Wärmedämmputzsystems 1 in gradueller Abstufung von der Haftschicht 27 des Unterputzes 8 bis zur Deckschicht 12 des Oberputzes 11 in einem Arbeitsablauf frisch auf frisch erfolgt, und die Funktion des gradierten Wärmedämmputzsystems 1 sich vorzugsweise aus der Kombination von zwei oder drei Vormischungen ergibt. Der Auftrag des gradierten Wärmedämmputzsystems 1 mit vorzugsweise fließendem Übergang von haftgebenden, wärmeisolierenden und verstärkenden Funktionsbereichen 8-11 ermöglicht einen feinstufigeren Eigenschaftsverlauf als das mit bekannten Methoden möglich ist, um Wärmeleitung, Wasserdampfdiffusion oder Rissausbreitung in optimaler Weise zu steuern und zu kontrollieren. Die offen-poröse Struktur des erstarrten bzw. erhärteten Dämmputzsystems 1 gewährleistet zudem eine hohe Wasserdampfdurchlässigkeit, hohe Wärmedämmwirkung, geringe Rissdurchleitung. Die offen-poröse Struktur des erfindungsgemäßen Wärmedämmputzsystems 1 wird durch die Anteile an Mikrohohlglaskugeln 6 und Kurzfasern 7 eingestellt. Der Auftrag ist durch die beschriebene Dosier-, Misch-, Förder- und Auftragstechnik in hohem Maße automatisierbar, wodurch der Arbeitsablauf beim Wärmedämmen von Gebäuden erheblich beschleunigt werden kann. Aufgrund des weitgehend mineralischen Ursprungs der Materialien ist das Wärmedämmputzsystem 1 grundsätzlich für ein stoffliches Recycling nach Lebensende als Sekundärrohstoff für neue Baustoffprodukte geeignet.

Das erfindungsgemäße Wärmedämmputzsystem 1 ist zudem sehr schnell, einfach und kostengünstig herstellbar. Denn es wird als Materialgradient aufgebracht, ohne dass eine Unterbrechung des Arbeitsvorgangs bzw. ein Werkzeugwechsel erfolgt.

Des Weiteren wurde erläutert, dass die erfindungsgemäße Gradierung bedeutet, dass sich die Zusammensetzung der aufeinanderfolgenden Schichten 4 vorzugsweise nur so wenig voneinander unterscheidet, dass ein im Wesentlichen kontinuierlicher Übergang von Schicht 4 zu Schicht 4 besteht.

Aufgrund der geringen Unterschiede in der Zusammensetzung ist auch die genaue Abgrenzung der oben beschriebenen Funktionszonen 8-11 voneinander in diesem Fall nicht immer möglich, da die Übergänge von der einen zur anderen Funktionszone 8-11 fließend sind. Allerdings können durchaus verschiedenen Bereichen/Zonen des Wärmedämmputzsystems 1 unterschiedliche (Haupt)funktionen zuordnet werden, wie z.B. die Wärmedämmung, die Armierung, die Haftbrückenbildung und die Abdichtung zur Umgebung.

Zudem liegt es auch im Rahmen der Erfindung, dass die Zusammensetzung der zueinander benachbarten Schichten 4;4b sich in größeren Abstufungen bzw. Sprüngen ändert. Beispielsweise könnte das erfindungsgemäße Wärmedämmputzsystem 1 aus den oben genannten Funktionsbereichen 8-11 bestehen, welche allerdings alle lediglich aus einer einzigen Schicht 4;4b gebildet werden.

Dennoch wäre das erfindungsgemäße Wärmedämmputzsystem 1 über seinen Querschnitt gradiert. Denn es kommt erfindungsgemäß darauf an, dass das erfindungsgemäße Wärmedämmputzsystem 1 ausschließlich aus Frischmörtelschichten 4b hergestellt wird, welche auf den drei Grundkomponenten basieren, welche also die drei Grundkomponenten zu mindestens 80 M.-%, vorzugsweise zu mindestens 85 M.-%, bevorzugt zu mindestens 90 M.-%, enthalten, besonders bevorzugt zu mindestens 95 M.-%, bezogen auf die Trockenmasse der Frischmörtelschichten 4b.

Das erfindungsgemäße Wärmedämmputzsystem 1 kann somit ohne Technologiewechsel hergestellt werden. Da der Auftrag der einzelnen Frischmörtelschichten 4b zudem vorzugsweise frisch auf frisch erfolgt, ist der Auftrag sehr schnell ohne lange Wartezeiten möglich. Zudem vermischen sich die aneinander angrenzenden Frischmörtelschichten 4b an ihren Grenzbereichen geringfügig miteinander, was ebenfalls zu einem weicheren Übergang der einzelnen Frischmörtelschichten 4b ineinander sowie zu einer Art Gradierung führt.

Zudem haben die drei Grundkomponenten den Vorteil, dass sie den Frischmörteln sehr gute Verarbeitungseigenschaften verleihen. Insbesondere verleihen sie den einzelnen Frischmörtelschichten 4b sehr gute Festigkeiten bei gleichzeitig sehr geringem Flächengewicht. Aufgrunddessen rutschen auch dickere Frischmörtelschichten nicht von einer vertikalen Wand 3 ab. Das gesamte Wärmedämmputzsystem 1 ist selbsttragend. Und die einzelnen Frischmörtelschichten 4b können sehr schnell nacheinander aufgetragen werden.

Die Mikrohohlglaskugeln schaffen zudem einen definierten Porenraum mit geschlossenen Poren (geschlossene Porosität). Dadurch ist der durch die Mikroglashohlkugeln geschaffene Porenraum in den einzelnen Schichten 4 sehr genau einstellbar und somit eine Gradierung sehr gut zu realisieren.

Zudem ist die Frost-/Taubeständigkeit des Wärmedämmputzsystem 1 sehr gut, da die Mikrohohlglaskugeln eine geschlossene Kugeloberfläche aufweisen, und deshalb kein Wasser in diese eindringen kann.

Im Rahmen der Erfindung liegt es dabei zudem auch, dass das erfindungsgemäße Wärmedämmputzsystem 1 nicht nur eine Gradierung über seinen Querschnitt bzw. in Dickenrichtung gesehen aufweist, sondern auch in eine oder mehrere Flächenrichtungen. Beispielsweise kann die Zusammensetzung der einzelnen Schichten 4;4b und/oder die Schichtstärke in den Eckbereichen oder im Bereich der Fenster- oder Türöffnungen oder Erkern, Wandvorsprüngen oder -nischen, Ornamente etc. anders sein als im übrigen Bereich.

Zudem kann das erfindungsgemäße Wärmedämmputzsystem 1 sowohl für die Innendämmung als auch die Außendämmung eingesetzt werden, insbesondere auch bei der (Altbau)sanierung. Insbesondere in diesem Fall kann es auch vorkommen, dass die Wände, z.B. im Bereich zugemauerter Fensteröffnungen, eine andere Beschaffenheit als im übrigen Bereich aufweisen. In diesem Fall kann die Zusammensetzung des Wärmedämmputzsystem 1 im Bereich der Fensteröffnung derart angepasst werden, dass die Schichtstärke des Wärmedämmputzsystems 1 dennoch überall gleich ist. Das Wärmedämmputzsystem 1 ist wiederum in der Fläche gradiert.

Des Weiteren können nicht nur Wände 3 mit dem erfindungsgemäßen Wärmedämmputzsystem 1 beschichtet werden, sondern auch Decken. Im Fall von Decken ist der zu beschichtende Untergrund 2 nicht vertikal, sondern horizontal oder geneigt. Der Auftrag erfolgt dabei von unten.

Des Weiteren kann der zu beschichtende Untergrund 2 aber auch horizontal sein und das Auftragen von oben erfolgen. Beispielsweise kann eine Fertigteilwand im Liegen beschichtet werden. In diesem Fall kann das Auftragen des erfindungsgemäßen Wärmedämmputzsystems 1 auch mittels Gießen erfolgen.

Zudem kann der zu beschichtende Untergrund 2 auch eine bereits erhärtete Putzschicht oder dergleichen aufweisen, z.B. bei der Sanierung von Altbauten. Insbesondere in diesem Fall kann der Unterputz entfallen.

Auch liegt es im Rahmen der Erfindung, dass die Auftragung mittels mehreren Spritzdüsen erfolgt und die Einstellung der Zusammensetzung der Frischmörtelschichten 4b durch Mischen der einzelnen aus den Spritzdüsen austretenden Materialstrahlen erfolgt.

Außerdem liegt es im Rahmen der Erfindung, dass in die noch feuchten Frischmörtelschichten 4b autark arbeitende Sensoren eingebracht werden, die nach Erstarren und Abbinden des Wärmedämmputzsystems 1 dauerhaft in dem Wärmedämmputzsystem 1 verbleiben und den Zustand der Fassade hinsichtlich Temperatur und Feuchtigkeit erfassen und die Daten drahtlos an eine Datenauswerteinheit übermitteln. Damit ist die Dämmwirkung der Fassade über Jahre hinweg dokumentiert und kann für die Erstellung und Aktualisierung des Energieausweises eines Gebäudes genutzt werden.

Des Weiteren liegt es im Rahmen der Erfindung, dass in den einzelnen Schichten 4;4b als mineralische Bindemittel-Grundkomponente andere mineralische Bindemittel(mischungen) verwendet werden. Vorzugsweise wird allerdings in allen Schichten 4;4b dasselbe Bindemittel bzw. dieselbe Bindemittel(mischung) verwendet.

Abschließend wird darauf hingewiesen, dass alle genannten, insbesondere beanspruchten, Merkmale des Dämmputzsystems für sich genommen und in jeglicher Kombination besonders vorteilhaft und Gegenstand der vorliegenden Erfindung sind. Zudem sind die jeweils angegebenen Ober- und Untergrenzen der einzelnen Bereichsangaben erfindungsgemäß alle miteinander kombinierbar.

### Ausführungsbeispiel:

Das gradierte Dämmputzsystem setzt sich aus zwei Vormischungen zusammen und wird auf eine ebene, vertikale Fläche gesprüht. Glasfasern werden zur Bildung einer Armierung im Oberputz über einen Faserschneider in den Frischmörtelstrahl geworfen.

Die Bindemittel-Vormischung besteht aus 95 M.-% Calciumsulfoaluminatzement zzgl. 2 M.-% Zusatzmitteln, 2 M.-% Mikrohohlglaskugeln mit einem d₅₀-Wert von 50 µm Durchmesser sowie 1 M.-% Glaskurzfasern mit einer Faserlänge von 6 mm.

Die wärmeisolierende Isolier-Vormischung besteht aus 70 M.-% Mikrohohlglaskugeln mit d₅₀ = 50 µm sowie 25 M.-% Calciumsulfoaluminatzement zzgl. 2 M.-% Zusatzmitteln sowie 3 M.-% Glaskurzfasern mit einer Faserlänge von 6 mm.

Die Vormischungen werden über pneumatische Förderung in einen statischen Mischer eingeleitet. Nach dem Mischprozess wird die Fertigmischung mit Pressluft aus der Düse gefördert. Beim Fördern durch die Düse wird Anmachwasser in den Partikelstrom eingeleitet. Das Verhältnis Wasser zu Zement beträgt 1,5:1. Durch den Förderdruck wird die Materialmischung an die Wand geworfen und dort homogenisiert. Der Auftrag erfolgt in Mäanderbahnen, die Bewegung der Auftragsvorrichtung wird über einen Linearantrieb gesteuert.

Das gradierte Dämmputzsystembesteht aus insgesamt 10 Schichten:

| | |
|---|---|
| Unterputz: | 1 Haftschicht |
| Dämmputz: | 6 Schichten |
| Armierungsputz: | 2 Schichten |
| Oberputz: | 1 Deckschicht |

Das Dämmputzsystem hat eine Gesamtdicke von 80 mm.

Als erste Schicht (Schicht 1) wird die Haftschicht von 5 mm Stärke aufgebracht, welche zu 90 M.-% aus Bindemittel-Vormischung und 10 M.-% Isolier-Vormischung besteht.

Nach der Haftschicht wird der Dämmputz aus 6 Schichten je 10 mm aufgetragen (Schicht 2 bis Schicht 7). Der Masseanteil an Isolier-Vormischung, und somit der Anteil an Mikrohohlglaskugeln, nimmt ausgehend von Schicht 1 mit 10 M.-% mit jeder Schicht um 20 M.-% zu, bis ein Anteil von 90 M.-% Isolier-Vormischung in Schicht 6 und 7 erreicht ist. Dies entspricht einem Gesamtanteil von 63 M.-% Hohlglaskugeln in Schicht 6 und 7. Der Gesamt-Bindemittelanteil sinkt sukzessive von 88 M.-% in Schicht 1 auf 32 M.-% in Schicht 6 und 7, der Gesamt-Glasfaseranteil steigt von Schicht 1 bis Schicht 6 und 7 von 1 M.-% auf 3 M.-%.

Anschließend folgt der Armierungsputz mit zwei Armierungsschichten je 5 mm. Die Einbringung der zusätzlichen Glasfasern erfolgt über einen Faserschneider. Die Fasern werden vom Faserschneider mit einer Länge von 10 mm in den Frischmörtelstrahl geworfen und durch dessen kinetische Energie mitgefördert. Die Dicke der jeweiligen Armierungsschicht ist mit 5 mm kleiner als die Länge der Glaskurzfasern mit 10 mm. In der ersten Armierungsschicht (Schicht 8) wird der Anteil an Isolier-Vormischung wieder von 90 M.-% auf 50 M.-% reduziert und ein Anteil von 10 M.-% Glasfasern über den Faserschneider eingebracht. Danach folgt eine weitere Armierungsschicht (Schicht 9) mit 15 M.-% Faserzugabe über den Faserschneider. Der Anteil an Bindemittelvormischung in Schicht 8 steigt auf 75 M.-%, der Anteil an Isolier-Vormischung fällt auf 10 M.-%. Nach dem Sprühvorgang wird die Schicht 9 mit Hilfe einer Abzieheinrichtung glattgezogen, wodurch die parallele Anordnung der Glasfasern erzielt und die Steifigkeit der Armierung erhöht wird.

Nach Fertigstellen des Armierungsputzes folgt das Aufbringen der Deckschicht mit 5 mm Dicke (Schicht 10). Der Faseranteil sinkt auf 2 M.-%, der Anteil an Isolier-Vormischung sinkt auf 1 M.-%, der Anteil an Bindemittel-Vormischung steigt auf 97 M.-%. Nach dem Sprühvorgang wird die Deckschicht mit Hilfe einer Abzieheinrichtung glattgezogen.

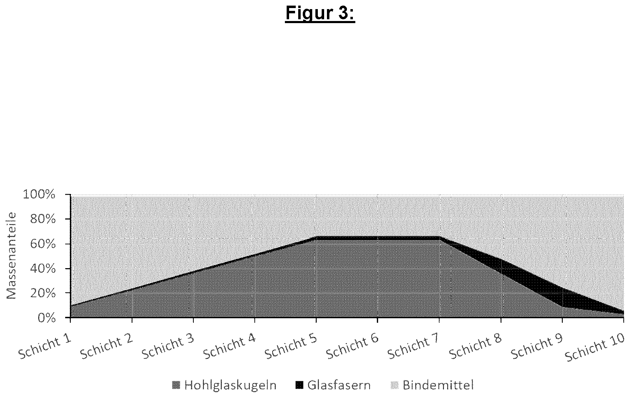

Figur 3 verdeutlicht die gradierte Zusammensetzung der zehn Schichten 1-10 aus den Komponenten Hohlglaskugel, Glasfasern und Bindemittel.

## Patentansprüche

1. Auf einen, insbesondere vertikalen, Untergrund (2), vorzugsweise eine Wand (3), in Schichten (4) aufgetragenes, bevorzugt aufgespritzes, mineralisches Wärmedämmputzsystem (1) aufweisend zumindest eine Bindemittelmatrix (5) aus zumindest einem erhärteten, mineralischen Bindemittel, sowie in die Bindemittelmatrix eingebundene Kurzfasern (7) und Dämmpartikel (6) in Form von Mikrohohlglaskugeln oder in Form von Mikrohohlglaskugeln und Aerogel,
**dadurch gekennzeichnet, dass**
das Wärmedämmputzsystem (1) zumindest über seinen Querschnitt gradiert ist.

2. Wärmedämmputzsystem (1) nach Anspruch 1,
**dadurch gekennzeichnet, dass**
das Wärmedämmputzsystem (1) über seinen Querschnitt bezüglich der Zusammensetzung gradiert ist, wobei vorzugsweise die Schichten (4) des Wärmedämmputzsystems (1) die Bindemittelmatrix (5), die Dämmpartikel (6) und die Kurzfasern (7) in unterschiedlichen Masseanteilen enthalten, so dass die Gradierung gebildet wird.

3. Wärmedämmputzsystem (1) nach Anspruch 1 oder 2,
**dadurch gekennzeichnet, dass**
die Schichten (4) des Wärmedämmputzsystems (1) jeweils aus erhärteten Frischmörtelschichten (4b) hergestellt sind, welche jeweils zu mindestens 80 M.-%, vorzugsweise zu mindestens 85 M.-%, bevorzugt zu mindestens 90 M.-%, besonders bevorzugt zu mindestens 95 M.-%, bezogen auf die Trockenmasse der Frischmörtelschichten (4b), aus
a) mineralischem Bindemittel
oder
b) mineralischem Bindemittel und Kurzfasern (7)
oder
c) mineralischem Bindemittel und Dämmpartikeln (6) oder
d) mineralischem Bindemittel, Dämmpartikeln (6) und Kurzfasern (7) bestehen.

4. Wärmedämmputzsystem (1) nach einem der vorhergehenden Ansprüche,
**dadurch gekennzeichnet, dass**
a) die Schichten (4) des Wärmedämmputzsystems (1) jeweils aus erhärteten Frischmörtelschichten (4b) hergestellt sind, welche zusätzlich zu dem mineralischen Bindemittel, sowie falls vorhanden den Kurzfasern (7) und/oder den Dämmpartikeln keine Zuschlagstoffe und/oder keine Zusatzstoffe enthalten,
und/oder
b) die Schichten (4) des Wärmedämmputzsystems (1) jeweils aus erhärteten Frischmörtelschichten (4b) hergestellt sind, wobei die trockenen Bestandteile der Frischmörtelschichten (4b), ohne die Kurzfasern (7), eine maximale Korngröße ≤ 0,6 mm, bevorzugt ≤ 0,4 mm, besonders bevorzugt ≤ 0,2 mm, aufweisen.

5. Wärmedämmputzsystem (1) nach einem der vorhergehenden Ansprüche,
**dadurch gekennzeichnet, dass**
es sich bei dem zumindest einen mineralischen Bindemittel um Calciumsulfoaluminatzement oder Portlandzement oder Kalkhydrat oder Gips oder ein Puzzolan handelt,
wobei vorzugsweise die Bindemittelmatrix aus erhärtetem Calciumsulfoaluminatzement oder einer erhärteten Bindemittelmischung aus Gips, Kalk, Portlandzement und Puzzolan besteht.

6. Wärmedämmputzsystem (1) nach einem der vorhergehenden Ansprüche,
**dadurch gekennzeichnet, dass**
das Wärmedämmputzsystem (1) mehrere Funktionsbereiche (8-11) aufweist, nämlich
a) vorzugsweise einen Unterputzbereich (8),
b) einen Wärmedämmputzbereich (9),
c) einen Armierungsputzbereich (10), und
d) vorzugsweise einen Oberputzbereich (11).

7. Wärmedämmputzsystem (1) nach Anspruch 6,
**dadurch gekennzeichnet, dass**
a) der Anteil an Dämmpartikeln (6) in einer oder mehreren aufeinanderfolgenden Schichten (4) des Wärmedämmputzbereichs (9) maximal ist und ab dieser Schicht (4) oder diesen Schichten (4) sowohl in Richtung zum Untergrund (2) hin als in entgegengesetzter Richtung sukzessive abnimmt,
und/oder
b) der Anteil an Kurzfasern (7) in einer oder mehreren aufeinanderfolgenden Schichten (4) des Armierungsputzbereichs (10) maximal ist und ab dieser Schicht (4) oder diesen Schichten (4) sowohl in Richtung zum Untergrund (2) hin als auch in entgegengesetzter Richtung sukzessive abnimmt.

8. Wärmedämmputzsystem (1) nach Anspruch 6 oder 7,
**dadurch gekennzeichnet, dass**
der Armierungsputzbereich (10) zumindest eine Schicht (4) aufweist, in der die Kurzfasern (7), insbesondere unidirektional, gerichtet sind, vorzugsweise parallel zum Untergrund (2) und vorzugsweise zueinander parallel ausgerichtet sind,
wobei vorzugsweise der Armierungsputzbereich (10) mehrere Schichten (4) aufweist, in der die Kurzfasern (7) jeweils unidirektional gerichtet sind, wobei die Kurzfasern (7) der Schichten (4) gleich oder unterschiedlich ausgerichtet sind, wobei vorzugsweise der Armierungsputzbereich (10) zumindest zwei Schichten (4) aufweist, deren Kurzfasern (7) eine zueinander senkrechte Ausrichtung aufweisen.

9. Wärmedämmputzsystem (1) nach einem der Ansprüche 6 bis 8,
**dadurch gekennzeichnet, dass**
a) der Oberputzbereich (11) eine das Wärmedämmputzsystem (1) zur Umgebung hin abschließende Deckschicht (12) aufweist,
und/oder
b) der Unterputzbereich (8) eine direkt auf dem Untergrund (2) angeordnete Haftschicht (27) aufweist.

10. Wärmedämmputzsystem (1) nach einem der vorhergehenden Ansprüche,
**dadurch gekennzeichnet, dass**
a) die Mikrohohlglaskugeln einen mittleren Teilchendurchmesser d₅₀ von 45 bis 60 µm, bevorzugt von 50 bis 55 µm, und/oder einen d₉₀-Wert von 70 bis 105 µm, bevorzugt von 75 bis 85 µm, bestimmt jeweils gemäß ISO 13320:2009-10 mittels Lasergranulometrie, aufweisen,
und/oder
b) die Mikrohohlglaskugeln einen maximalen Teilchendurchmesser, bestimmt gemäß ISO 13320:2009-10 mittels Lasergranulometrie, von ≤ 115 µm aufweisen,
und/oder
c) die Mikrohohlglaskugeln eine Schüttdichte gemäß DIN EN 459-2:2010-12, von 0,06 bis 0,1 g/cm³, bevorzugt von 0,07 bis 0,8 g/cm³, aufweisen,
und/oder
d) die Mikrohohlglaskugeln einzellig ausgebildet sind,
und/oder
e) die Mikrohohlglaskugeln aus Borsilikatglas oder Kalknatronglas, bevorzugt aus Borsilikatglas, bestehen.

11. Wärmedämmputzsystem (1) nach einem der vorhergehenden Ansprüche,
**dadurch gekennzeichnet, dass**
das Aerogel
a) einen mittleren Teilchendurchmesser d₅₀ von 7 bis 11 µm, bestimmt gemäß ISO 13320:2009-10 mittels Lasergranulometrie,
und/oder
b) eine Schüttdichte gemäß DIN EN 459-2:2010-12 von 30 bis 45 kg/m³ aufweist.

12. Wärmedämmputzsystem (1) nach einem der vorhergehenden Ansprüche,
**dadurch gekennzeichnet, dass**
a) die Kurzfasern (7) einen Durchmesser von 7 bis 20 µm, bevorzugt 7 bis 11 µm, und/oder eine Länge von 1 bis 30 mm, bevorzugt 4 bis 8 mm, aufweisen,
und/oder
b) es sich bei den Kurzfasern (7) um anorganische Kurzfasern (7) und/oder um organische Polymerfasern und/oder organische Naturfasern handelt, wobei es sich bei den anorganischen Kurzfasern (7) vorzugsweise um mineralische Kurzfasern, vorzugsweise Glasfasern, bevorzugt um Glasfasern der Typen E, C, S, R, HM oder AR, und/oder Basaltfasern, und/oder um Carbonfasern und/oder metallische Kurzfasern handelt.

13. Wärmedämmputzsystem (1) nach einem der vorhergehenden Ansprüche,
**dadurch gekennzeichnet, dass**
a) das Wärmedämmputzsystem (1) zusätzlich in zumindest eine Flächenrichtung gradiert ist,
und/oder
b) der Anteil an Aerogel ≦ 50 Vol.-%, bevorzugt ≦ 30 Vol.-%, besonders bevorzugt ≦ 10 Vol.-%, bezogen auf die Gesamtmenge an Dämmpartikeln im Wärmedämmputzsystem (1) beträgt,
und/oder
c) das Wärmedämmputzsystem (1) auf den Untergrund (2) aufgespritzt ist.

14. Verfahren zur Herstellung eines Wärmedämmputzsystems (1) nach einem der vorhergehenden Ansprüche, wobei das Wärmedämmputzsystem (1) schichtweise in aufeinanderfolgenden Frischmörtelschichten (4b), bevorzugt frisch auf frisch, auf einen Untergrund (2), vorzugsweise eine Wand (3), aufgetragen wird,
**dadurch gekennzeichnet, dass**
die Frischmörtelschichten (4b) jeweils zumindest ein mineralisches Bindemittel, Kurzfasern (7) und/oder Dämmpartikel (6) in Form von Mikrohohlglaskugeln und/oder Aerogel in derart unterschiedlichen Masseanteilen enthalten, dass ein Wärmedämmputzsystem (1) erzeugt wird, das zumindest über seinen Querschnitt gradiert ist.

15. Verfahren nach Anspruch 14,
**dadurch gekennzeichnet, dass**
die Frischmörtelschichten (4b) jeweils zu mindestens 80 M.-%, vorzugsweise zu mindestens 85 M.-%, bevorzugt zu mindestens 90 M.-%, besonders bevorzugt zu mindestens 95 M.-%, bezogen auf die Trockenmasse der Frischmörtelschichten (4b), aus dem zumindest einen mineralischen Bindemittel und, falls vorhanden, den Dämmpartikeln (6) und/oder den Kurzfasern (7) bestehen.

16. Verfahren nach Anspruch 14 oder 15,
**dadurch gekennzeichnet, dass**
das Auftragen der Frischmörtelschichten (4b) mittels Spritzen, bevorzugt mittels Trockenspritzen oder mittels Nassspritzen, erfolgt,
wobei vorzugsweise die Frischmörtelschichten (4b) mittels einer Spritzdüse (17) aufgetragen werden, wobei zur Erzeugung von zumindest einer armierten Frischmörtelschicht (4b) Kurzfasern (7) direkt an der Spritzdüse (17) in einen aus der Spritzdüse (17) austretenden Frischmörtelstrahl (26) aufgegeben werden.

17. Verfahren nach einem der Ansprüche 14 bis 16,
**dadurch gekennzeichnet, dass**
für die Herstellung der Frischmörtelschichten (4b) zumindest zwei, vorzugsweise drei, unterschiedliche trockene Vormischungen verwendet werden, welche jeweils das zumindest eine mineralische Bindemittel, die Dämmpartikel (6) und die Kurzfasern (7) in unterschiedlichen Masseanteilen enthalten, wobei vorzugsweise
a) eine Bindemittel-Vormischung, welche hauptsächlich aus Bindemittel besteht und geringere Anteile an Mikrohohlglaskugeln und Kurzfasern (7) aufweist,
b) eine Hohlglaskugel-Vormischung, welche hauptsächlich aus Mikrohohlglaskugeln besteht und geringere Anteile an Bindemittel und Kurzfasern (7) aufweist, und
c) eine Faser-Vormischung, welche hauptsächlich aus Kurzfasern (7) besteht und geringere Anteile an Bindemittel und Mikrohohlglaskugeln aufweist,
verwendet werden.

18. Verfahren nach einem der Ansprüche 14 bis 17,
**dadurch gekennzeichnet, dass**
es sich bei dem zumindest einen Bindemittel um Calciumsulfoaluminatzement oder Portlandzement oder Kalkhydrat oder Gips oder ein Puzzolan handelt,
wobei vorzugsweise der Anteil an Calciumsulfoaluminatzement oder einer Bindemittelmischung aus Gips, Kalkhydrat, Portlandzement und Puzzolan 70 bis 100 M.-%, bevorzugt 85 bis 100 M.-%, besonders bevorzugt 95 bis 100 M.-%, bezogen auf den gesamten Bindemittelgehalt der Frischmörtelschichten (4b) beträgt.

19. Verfahren nach einem der Ansprüche 14 bis 18,
**dadurch gekennzeichnet, dass**
a) der maximale Anteil an Dämmpartikeln (6) in einer oder mehreren Frischmörtelschichten (4b) des Wärmedämmputzbereichs (9) 30 bis 70 M.-%, bezogen auf die Trockenmasse der Frischmörtelschicht (4b), beträgt,
und/oder
b) der maximale Anteil an Kurzfasern (7) in einer oder mehreren Frischmörtelschichten (4b) des Armierungsputzbereichs (10) 5 bis 15 M.%, bevorzugt 7 bis 10 M.-%, bezogen auf die Trockenmasse der Frischmörtelschicht (4b), beträgt,
und/oder
c) der Anteil an Dämmpartikeln (6) in der Deckschicht (12) ≦ 4 M.-%, bevorzugt ≦ 3 M.-%, bezogen auf die Trockenmasse der Frischmörtelschicht (4b), beträgt.
und/oder
d) der Anteil an, vorzugsweise ungerichteten, Kurzfasern (7) in der Deckschicht (12) ≦ 5 M.-%, bezogen auf die Trockenmasse der Frischmörtelschicht (4b), beträgt,
und/oder
e) der Anteil an Dämmpartikeln (6) in der Haftschicht (27) ≦ 10 M.-%, bezogen auf die Trockenmasse der Frischmörtelschicht (4b), beträgt, und/oder
f) der Anteil an, vorzugsweise ungerichteten, Kurzfasern (7) in der Haftschicht (27) ≦ 2 M.-%, bezogen auf die Trockenmasse der Frischmörtelschicht (4b), beträgt.

20. Verfahren nach einem der Ansprüche 14 bis 19,
**dadurch gekennzeichnet, dass**
die Frischmörtelschichten (4b) automatisiert gesteuert mittels eines Roboters (21) aufgetragen werden, wobei der Roboter (21) vorzugsweise einen, bevorzugt mehrachsigen Roboterarm (25) aufweist, an dessen freien Ende eine Spritzdüse (17), angeordnet ist,
wobei vorzugsweise der Roboter (21) zum Auftragen mittels eines Portalsystems bewegt wird.

21. Verfahren nach einem der Ansprüche 14 bis 20,
**dadurch gekennzeichnet, dass**
a) die Frischmörtelschichten (4b) zumindest einen Luftporenbildner und/oder zumindest ein Wasserretentionsmittel, z.B. Methylcellulose, und/oder zumindest ein Verdickungsmittel und/oder zumindest ein Dispersionspulver und/oder zumindest ein Hydrophobierungsmittel und/oder zumindest einen Erstarrungsregler und/oder zumindest ein Dispergierhilfsmittel und/oder zumindest ein Fließmittel als Zusatzmittel aufweisen,
und/oder
b) die trockenen Bestandteile der Frischmörtelschichten (4b), ohne die Kurzfasern (7), eine maximale Korngröße ≤ 0,6 mm, bevorzugt ≤ 0,4 mm, besonders bevorzugt ≤ 0,2 mm, aufweisen,
und/oder
c) die Kurzfasern (7) zumindest teilweise, vorzugsweise die gerichteten Kurzfasern (7), über eine Faserzugabeeinrichtung (18) an der Spritzdüse (17) in den aus der Spritzdüse (17) austretenden Frischmörtelstrahl (26) zugegeben werden, wobei vorzugsweise von der Faserzugabeeinrichtung (18) ein endloses Faserbündel (24) zugeführt wird und von diesem die Kurzfasern (7) abgeschnitten und in den Frischmörtelstrahl (26) zugegeben werden,
und/oder
d) die Einstellung der Zusammensetzung, insbesondere aus den Vormischungen, der Frischmörtelschichten (4b) automatisiert gesteuert erfolgt.

## Claims

1. Mineral thermal insulation plaster system (1) applied, preferably sprayed, in layers (4) to an, in particular vertical, underground (2), preferably a wall (3), comprising at least one binder matrix (5) of at least one hardened mineral binder, as well as staple fibers (7) and insulating particles (6) in the form of micro hollow glass spheres or in the form of micro hollow glass spheres and aerogel embedded in the binder matrix,
**characterized in that**
the thermal insulation plaster system (1) is graded at least over its cross-section.

2. Thermal insulation plaster system (1) according to claim 1,
**characterized in that**
the thermal insulation plaster system (1) is graded over its cross-section with respect to composition, wherein preferably the layers (4) of the thermal insulation plaster system (1) contain the binder matrix (5), the insulating particles (6) and the staple fibers (7) in different amounts by mass, so that the grading is formed.

3. Thermal insulation plaster system (1) according to claim 1 or 2,
**characterized in that**
the layers (4) of the thermal insulation plaster system (1) are each produced from hardened fresh mortar layers (4b), which each consist of at least 80 ma.-%, preferably by at least 85 ma.-%, preferably by at least 90 ma.-%, particularly preferably by at least 95 ma.-%, based on the dry mass of the fresh mortar layers (4b), of
a) mineral binder
or
b) mineral binder and staple fibers (7)
or
c) mineral binder and insulating particles (6)
or
d) mineral binder, insulating particles (6) and staple fibers (7).

4. Thermal insulation plaster system (1) according to one of the preceding claims,
**characterized in that**
a) the layers (4) of the thermal insulation plaster system (1) are each produced from hardened fresh mortar layers (4b) which, in addition to the mineral binder and, if present, the staple fibers (7) and/or the insulation particles, contain no aggregates and/or no additives,
and/or
b) the layers (4) of the thermal insulation plaster system (1) are each produced from hardened fresh mortar layers (4b), wherein the dry constituents of the fresh mortar layers (4b), excluding the staple fibers (7), have a maximum grain size ≤ 0.6 mm, preferably ≤ 0.4 mm, particularly preferably ≤ 0.2 mm.

5. Thermal insulation plaster system (1) according to one of the preceding claims,
**characterized in that**
the at least one mineral binder is calcium sulfoaluminate cement or Portland cement or hydrated lime or gypsum or a pozzolan,
wherein preferably the binder matrix consists of hardened calcium sulfoaluminate cement or a hardened binder mixture of gypsum, lime, Portland cement and pozzolan.

6. Thermal insulation plaster system (1) according to one of the preceding claims,
**characterized in that**
the thermal insulation plaster system (1) has several functional areas (8-11), namely
a) preferably an undercoat plaster area (8),
b) a thermal insulation plaster area (9),
c) a reinforcement plaster area (10), and
d) preferably a finishing plaster area (11).

7. Thermal insulation plaster system (1) according to claim 6,
**characterized in that**
a) the amount of insulating particles (6) is at a maximum in one or more successive layers (4) of the thermal insulation plaster area (9) and successively decreases from this layer (4) or these layers (4) in the direction towards the underground (2) as well as in the opposite direction,
and/or
b) the amount of staple fibers (7) is at a maximum in one or more successive layers (4) of the reinforcement plaster area (10) and successively decreases from this layer (4) or these layers (4) in the direction towards the underground (2) as well as in the opposite direction.

8. Thermal insulation plaster system (1) according to claim 6 or 7,
**characterized in that**
the reinforcement plaster area (10) comprises at least one layer (4) in which the staple fibers (7) are aligned, in particular unidirectionally, preferably parallel to the underground (2) and preferably parallel to each other,
wherein preferably the reinforcement rendering region (10) has a plurality of layers (4) in each of which the staple fibers (7) are unidirectionally aligned, wherein the staple fibers (7) of the layers (4) are aligned identically or differently, wherein preferably the reinforcement plaster region (10) comprises at least two layers (4) whose staple fibers (7) have an alignment perpendicular to one another.

9. Thermal insulation plaster system (1) according to one of claims 6 to 8, **characterized in that**
a) the finishing plaster area (11) has a top layer (12) which closes the thermal insulation plaster system (1) towards the surroundings,
and/or
b) the undercoat plaster area (8) has an adhesive layer (27) arranged directly on the underground (2).

10. Thermal insulation plaster system (1) according to one of the preceding claims,
**characterized in that**
a) the micro hollow glass spheres comprise a mean particle diameter d₅₀ of 45 to 60 µm, preferably of 50 to 55 µm, and/or a d₉₀ value of 70 to 105 µm, preferably of 75 to 85 µm, determined in each case in accordance with ISO 13320:2009-10 by laser granulometry,
and/or
b) the micro hollow glass spheres comprise a maximum particle diameter, determined according to ISO 13320:2009-10 by laser granulometry, of ≤ 115 µm,
and/or
c) the micro hollow glass spheres comprise a bulk density according to DIN EN 459-2:2010-12, of 0.06 to 0.1 g/cm³, preferably of 0.07 to 0.8 g/cm³,
and/or
d) the micro hollow glass spheres are formed single-celled,
and/or
e) the micro hollow glass spheres are made of borosilicate glass or soda-lime glass, preferably borosilicate glass.

11. Thermal insulation plaster system (1) according to one of the preceding claims,
**characterized in that**
the aerogel comprises
a) a mean particle diameter d₅₀ of 7 to 11 µm, determined according to ISO 13320:2009-10 by laser granulometry,
and/or
b) a bulk density according to DIN EN 459-2:2010-12 of 30 to 45 kg/m³.

12. Thermal insulation plaster system (1) according to one of the preceding claims,
**characterized in that**
a) the staple fibers (7) comprise a diameter of 7 to 20 µm, preferably 7 to 11 µm, and/or a length of 1 to 30 mm, preferably 4 to 8 mm,
and/or
b) the staple fibers (7) are inorganic staple fibers (7) and/or organic polymer fibers and/or organic natural fibers,
wherein preferably the inorganic staple fibers (7) are mineral staple fibers, preferably glass fibers, preferably glass fibers of types E, C, S, R, HM or AR, and/or basalt fibers, and/or carbon fibers and/or metallic staple fibers.

13. Thermal insulation plaster system (1) according to one of the preceding claims,
**characterized in that**
a) the thermal insulation plaster system (1) is additionally graded in at least one surface direction,
and/or
b) the amount of aerogel is ≤ 50 vol.-%, preferably ≤ 30 vol.-%, particularly preferably ≤ 10 vol.-%, based on the total amount of insulating particles in the thermal insulation plaster system (1),
and/or
c) the thermal insulation plaster system (1) is sprayed onto the underground (2).

14. Method for producing a thermal insulation plaster system (1) according to one of the preceding claims, wherein the thermal insulation plaster system (1) is applied layer-wise in successive fresh mortar layers (4b), preferably fresh on fresh, to an underground (2), preferably a wall (3),
**characterized in that**
the fresh mortar layers (4b) each contain at least one mineral binder, staple fibers (7) and/or insulating particles (6) in the form of micro hollow glass spheres and/or aerogel in such different mass amounts that a thermal insulation plaster system (1) is produced which is graded at least over its cross section.

15. Method according to claim 14,
**characterized in that**
the fresh mortar layers (4b) each consist by at least 80 ma.-%, preferably by at least 85 ma.-%, preferably by at least 90 ma.-%, particularly preferably by at least 95 ma.-%, based on the dry mass of the fresh mortar layers (4b), of the at least one mineral binder and, if present, the insulating particles (6) and/or the staple fibers (7).

16. Method according to claim 14 or 15,
**characterized in that**
applying of the fresh mortar layers (4b) is carried out by spraying, preferably by dry spraying or by wet spraying,
wherein preferably the fresh mortar layers (4b) are applied by means of a spray nozzle (17), wherein staple fibers (7) are fed directly at the spray nozzle (17) into a fresh mortar jet (26) emerging from the spray nozzle (17) to produce at least one reinforced fresh mortar layer (4b).

17. Method according to one of claims 14 to 16,
**characterized in that**
at least two, preferably three, different dry premixes are used for the production of the fresh mortar layers (4b), each of which contains the at least one mineral binder, the insulating particles (6) and the staple fibers (7) in different amounts by weight, wherein preferably
a) a binder premix consisting mainly of binder and having lower amounts of micro hollow glass spheres and staple fibers (7),
b) a hollow glass sphere premix consisting mainly of micro hollow glass spheres and having lower amounts of binder and staple fibers (7), and
c) a fiber premix consisting mainly of staple fibers (7) and having lower amounts of binder and micro hollow glass spheres,
are used.

18. Method according to one of claims 14 to 17,
**characterized in that**
the at least one binder is calcium sulfoaluminate cement or Portland cement or hydrated lime or gypsum or a pozzolan,
wherein preferably the amount of calcium sulfoaluminate cement or a binder mixture of gypsum, hydrated lime, Portland cement and pozzolan is 70 to 100 wt.%, preferably 85 to 100 wt.%, particularly preferably 95 to 100 wt.%, based on the total binder content of the fresh mortar layers (4b).

19. Method according to one of claims 14 to 18,
**characterized in that**
a) the maximum amount of insulating particles (6) in one or more fresh mortar layers (4b) of the thermal insulation plaster area (9) is 30 to 70 wt.%, based on the dry mass of the fresh mortar layer (4b),
and/or
b) the maximum amount of staple fibers (7) in one or more fresh mortar layers (4b) of the reinforcing plaster area (10) is 5 to 15 wt.%, preferably 7 to 10 wt.%, based on the dry mass of the fresh mortar layer (4b),
and/or
c) the amount of insulating particles (6) in the top layer (12) is ≤ 4 wt.%, preferably ≤ 3 wt.%, based on the dry mass of the fresh mortar layer (4b),
and/or
d) the amount of, preferably unaligned, staple fibers (7) in the top layer (12) is ≤ 5 wt.%, based on the dry mass of the fresh mortar layer (4b),
and/or
e) the amount of insulating particles (6) in the adhesive layer (27) is < 10 wt.%, based on the dry mass of the fresh mortar layer (4b),
and/or
f) the amount of, preferably unaligned, staple fibers (7) in the adhesive layer (27) is ≤ 2 wt.%, based on the dry mass of the fresh mortar layer (4b).

20. Method according to one of claims 14 to 19,
**characterized in that**
the fresh mortar layers (4b) are applied in an automatically controlled manner by means of a robot (21), the robot (21) preferably comprising a, preferably multi-axis, robot arm (25), at the free end of which a spray nozzle (17) is arranged,
wherein preferably the robot (21) is moved for application by means of a portal system.

21. Method according to one of claims 14 to 20,
**characterized in that**
a) the fresh mortar layers (4b) comprise at least one air entraining agent and/or at least one water retention agent, e.g. methyl cellulose, and/or at least one thickening agent and/or at least one dispersing powder and/or at least one hydrophobing agent and/or at least one setting regulator and/or at least one dispersing aid agent and/or at least one plasticizer as admixture,
and/or
b) the dry constituents of the fresh mortar layers (4b), excluding the staple fibers (7), have a maximum particle size ≤ 0.6 mm, preferably ≤ 0.4 mm, particularly preferably ≤ 0.2 mm,
and/or
c) the staple fibers (7) at least partially, preferably the aligned staple fibers (7), are added into the fresh mortar jet (26) emerging from the spray nozzle (17) at the spray nozzle (17) via a fiber feeding device (18), wherein preferably an endless fiber bundle (24) is fed from the fiber feeding device (18) and the staple fibers (7) are cut off from this and fed into the fresh mortar jet (26),
and/or
d) the adjustment of the composition, in particular from the premixes, of the fresh mortar layers (4b) is carried out in an automatically controlled manner.

## Revendications

1. Système d'enduit d'isolation thermique minéral (1) appliqué en couches (4), de préférence projeté, sur un support (2), en particulier sur un support (2) vertical, de préférence sur un mur (3), comprenant au moins une matrice de liant (5) constituée d'au moins un liant minéral durci, ainsi que des fibres courtes (7) et des particules isolantes (6) sous forme de microsphères de verre creuses ou sous forme de microsphères de verre creuses et d'aérogel, intégrées dans la matrice de liant,
**caractérisé en ce que**
le système d'enduit d'isolation thermique (1) est gradué au moins sur sa section transversale.

2. Système d'enduit d'isolation thermique (1) selon la revendication 1, **caractérisé en ce que**
le système d'enduit d'isolation thermique (1) est gradué sur sa section transversale en ce qui concerne la composition, les couches (4) du système d'enduit d'isolation thermique (1) contenant de préférence la matrice de liant (5), les particules isolantes (6) et les fibres courtes (7) dans des proportions massiques différentes, de sorte que la gradation est formée.

3. Système d'enduit d'isolation thermique (1) selon la revendication 1 ou 2, **caractérisé en ce que**
les couches (4) du système d'enduit d'isolation thermique (1) sont respectivement fabriquées à partir de couches de mortier frais (4b) durcies, qui sont respectivement composées à au moins 80 % en masse, de préférence à au moins 85 % en masse, de préférence à au moins 90 % en masse, de manière particulièrement préférée à au moins 95 % en masse, par rapport à la masse sèche des couches de mortier frais (4b), de
a) liant minéral
ou
b) liant minéral et fibres courtes (7)
ou
c) liant minéral et particules isolantes (6)
ou
d) liant minéral, particules isolantes (6) et fibres courtes (7)

4. Système d'enduit d'isolation thermique (1) selon l'une quelconque des revendications précédentes,
**caractérisé en ce que**
a) les couches (4) du système d'enduit d'isolation thermique (1) sont respectivement fabriquées à partir de couches de mortier frais durci (4b) qui, en plus du liant minéral, ainsi que, le cas échéant, des fibres courtes (7) et/ou des particules isolantes, ne contiennent pas de granulats et/ou d'adjuvants,
et/ou
b) les couches (4) du système d'enduit d'isolation thermique (1) sont respectivement fabriquées à partir de couches de mortier frais (4b) durcies, les composants secs des couches de mortier frais (4b), sans les fibres courtes (7), comprenant une taille du grain maximale ≤ 0,6 mm, de préférence ≤ 0,4 mm, de manière particulièrement préférée ≤ 0,2 mm.

5. Système d'enduit d'isolation thermique (1) selon l'une des revendications précédentes,
**caractérisé en ce que**
ledit au moins un liant minéral est du ciment au sulfoaluminate de calcium ou du ciment Portland ou de la chaux hydratée ou du gypse ou une pouzzolane,
la matrice de liant étant de préférence constituée de ciment au sulfoaluminate de calcium durci ou d'un mélange de liants durci constitué de gypse, de chaux, de ciment Portland et de pouzzolane.

6. Système d'enduit d'isolation thermique (1) selon l'une des revendications précédentes,
**caractérisé en ce que**
le système d'enduit d'isolation thermique (1) comprend plusieurs zones fonctionnelles (8-11), à savoir
a) de préférence une zone d'encastrement (8),
b) une zone d'enduit d'isolation thermique (9),
c) une zone d'enduit d'armature (10), et
d) de préférence une zone d'enduit supérieur (11).

7. Système d'enduit d'isolation thermique (1) selon la revendication 6, **caractérisé en ce que**
a) la proportion de particules isolantes (6) est maximale dans une ou plusieurs couches (4) successives de la zone d'enduit d'isolation thermique (9) et diminue successivement à partir de cette couche (4) ou de ces couches (4), aussi bien en direction du support (2) que dans la direction opposée,
et/ou
b) la proportion de fibres courtes (7) est maximale dans une ou plusieurs couches (4) successives de la zone d'enduit d'armature (10) et diminue successivement à partir de cette couche (4) ou de ces couches (4), aussi bien en direction du support (2) que dans la direction opposée.

8. Système d'enduit d'isolation thermique (1) selon la revendication 6 ou 7, **caractérisé en ce que**
la zone d'enduit d'armature (10) comprend au moins une couche (4) dans laquelle les fibres courtes (7) sont orientées, en particulier de manière unidirectionnelle, de préférence parallèlement au support (2) et de préférence parallèlement entre elles,
la zone d'enduit d'armature (10) comprenant de préférence plusieurs couches (4) dans lesquelles les fibres courtes (7) sont respectivement orientées de manière unidirectionnelle, les fibres courtes (7) des couches (4) étant orientées de manière identique ou différente, la zone d'enduit d'armature (10) comprenant de préférence au moins deux couches (4) dont les fibres courtes (7) comprennent une orientation mutuellement perpendiculaire.

9. Système d'enduit d'isolation thermique (1) selon l'une des revendications 6 à 8,
**caractérisé en ce que**
a) la zone d'enduit supérieur (11) comprend une couche de couverture (12) fermant le système d'enduit d'isolation thermique (1) vers l'environnement,
et/ou
b) la zone d'encastrement (8) comprend une couche d'adhérence (27) disposée directement sur le support (2).

10. Système d'enduit d'isolation thermique (1) selon l'une quelconque des revendications précédentes,
**caractérisé en ce que**
a) les microsphères de verre creuses comprennent un diamètre de particule moyen d₅₀ de 45 à 60 µm, de préférence de 50 à 55 µm, et/ou une valeur d₉₀ de 70 à 105 µm, de préférence de 75 à 85 µm, déterminée respectivement selon ISO 13320:2009-10 par granulométrie laser,
et/ou
b) les microsphères de verre creuses comprennent un diamètre de particule maximal, déterminé selon ISO 13320:2009-10 par granulométrie laser, de ≤ 115 µm,
et/ou
c) les microsphères de verre creuses comprennent une densité apparente selon DIN EN 459-2:2010-12, de 0,06 à 0,1 g/cm³, de préférence de 0,07 à 0,8 g/cm³,
et/ou
d) les microsphères de verre creuses sont formées de manière unicellulaire,
et/ou
e) les microsphères de verre creuses sont en verre borosilicaté ou en verre sodo-calcique, de préférence en verre borosilicaté.

11. Système d'enduit d'isolation thermique (1) selon l'une quelconque des revendications précédentes,
**caractérisé en ce que**
l'aérogel comprend
a) un diamètre moyen des particules d₅₀ de 7 à 11 µm, déterminé selon ISO 13320:2009-10 par granulométrie laser,
et/ou
b) une densité apparente selon DIN EN 459-2:2010-12 de 30 à 45 kg/m³

12. Système d'enduit d'isolation thermique (1) selon l'une quelconque des revendications précédentes,
**caractérisé en ce que**
a) les fibres courtes (7) ont un diamètre de 7 à 20 µm, de préférence de 7 à 11 µm, et/ou une longueur de 1 à 30 mm, de préférence de 4 à 8 mm,
et/ou
b) il s'agit pour les fibres courtes (7) de fibres courtes (7) inorganiques et/ou de fibres polymères organiques et/ou de fibres naturelles organiques, les fibres courtes (7) inorganiques étant de préférence des fibres courtes minérales, de préférence des fibres de verre, de préférence des fibres de verre de type E, C, S, R, HM ou AR, et/ou des fibres de basalte, et/ou des fibres de carbone et/ou des fibres courtes métalliques.

13. Système d'enduit d'isolation thermique (1) selon l'une quelconque des revendications précédentes,
**caractérisé en ce que**
a) le système d'enduit d'isolation thermique (1) est en outre gradué dans au moins une direction de surface,
et/ou
b) la proportion d'aérogel est ≦ 50 % en volume, de préférence ≦ 30 % en volume, de manière particulièrement préférée ≦ 10 % en volume, par rapport à la quantité totale de particules isolantes dans le système d'enduit d'isolation thermique (1),
et/ou
c) le système d'enduit d'isolation thermique (1) est projeté sur le support (2).

14. Procédé de fabrication d'un système d'enduit d'isolation thermique (1) selon l'une des revendications précédentes, dans lequel le système d'enduit d'isolation thermique (1) est appliqué par couches successives de mortier frais (4b), de préférence frais sur frais, sur un support (2), de préférence un mur (3),
**caractérisé en ce que**
les couches de mortier frais (4b) contiennent chacune au moins un liant minéral, des fibres courtes (7) et/ou des particules isolantes (6) sous forme de microsphères de verre creuses et/ou d'aérogel dans des proportions massiques différentes de telle sorte que l'on produit un système d'enduit d'isolation thermique (1) qui est gradué au moins sur sa section transversale.

15. Procédé selon la revendication 14,
**caractérisé en ce que**
les couches de mortier frais (4b) sont constituées chacune à au moins 80 % en masse, de préférence à au moins 85 % en masse, de préférence à au moins 90 % en masse, de manière particulièrement préférée à au moins 95 % en masse, par rapport à la masse sèche des couches de mortier frais (4b), de l'au moins un liant minéral et, si elles sont présentes, des particules isolantes (6) et/ou des fibres courtes (7).

16. Procédé selon la revendication 14 ou 15,
**caractérisé en ce que**
l'application des couches de mortier frais (4b) s'effectue par projection, de préférence par projection à sec ou par projection humide,
les couches de mortier frais (4b) étant de préférence appliquées au moyen d'une buse de projection (17), des fibres courtes (7) étant appliquées directement à la buse de projection (17) dans un jet de mortier frais (26) sortant de la buse de projection (17) pour produire au moins une couche de mortier frais armée (4b).

17. Procédé selon l'une des revendications 14 à 16,
**caractérisé en ce que**
pour la fabrication des couches de mortier frais (4b), on utilise au moins deux, de préférence trois, prémélanges secs différents, qui contiennent chacun le au moins un liant minéral, les particules d'isolation (6) et les fibres courtes (7) dans des proportions massiques différentes, où, de préférence,
a) un prémélange de liant, qui est constitué principalement de liant et présente des proportions plus faibles de microsphères de verre creuses et de fibres courtes (7),
b) un prémélange de sphères de verre creuses, qui est constitué principalement de microsphères de verre creuses et présente des proportions plus faibles de liant et de fibres courtes (7), et
c) un prémélange de fibres qui est constitué principalement de fibres courtes (7) et présentant des proportions plus faibles de liant et de microsphères de verre creuses,
sont utilisés.

18. Procédé selon l'une des revendications 14 à 17,
**caractérisé en ce que**
ledit au moins un liant est du ciment au sulfoaluminate de calcium ou du ciment Portland ou de la chaux hydratée ou du gypse ou une pouzzolane,
la proportion de ciment au sulfoaluminate de calcium ou d'un mélange de liants constitué de gypse, de chaux hydratée, de ciment Portland et de pouzzolane étant de préférence de 70 à 100 % en masse, de préférence de 85 à 100 % en masse, de manière particulièrement préférée de 95 à 100 % en masse, par rapport à la teneur totale en liant des couches de mortier frais (4b).

19. Procédé selon l'une des revendications 14 à 18,
**caractérisé en ce que**
a) la proportion maximale de particules isolantes (6) dans une ou plusieurs couches de mortier frais (4b) de la zone d'enduit d'isolation thermique (9) est de 30 à 70 % en masse, par rapport à la masse sèche de la couche de mortier frais (4b),
et/ou
b) la proportion maximale de fibres courtes (7) dans une ou plusieurs couches de mortier frais (4b) de la zone d'enduit d'armature (10) est de 5 à 15 % en masse, de préférence de 7 à 10 % en masse, par rapport à la masse sèche de la couche de mortier frais (4b), et/ou
c) la proportion de particules isolantes (6) dans la couche de couverture (12) est ≦ 4 % en masse, de préférence ≦ 3 % en masse, par rapport à la masse sèche de la couche de mortier frais (4b).
et/ou
d) la proportion de fibres courtes (7), de préférence non orientées, dans la couche de couverture (12) est ≦ 5 % en masse, par rapport à la masse sèche de la couche de mortier frais (4b),
et/ou
e) la proportion de particules isolantes (6) dans la couche d'adhérence (27) est ≦ 10 % en masse, par rapport à la masse sèche de la couche de mortier frais (4b),
et/ou
f) la proportion de fibres courtes (7), de préférence non orientées, dans la couche d'adhérence (27) est ≦ 2 % en masse, par rapport à la masse sèche de la couche de mortier frais (4b).

20. Procédé selon l'une des revendications 14 à 19,
**caractérisé en ce que**
les couches de mortier frais (4b) sont appliquées de manière automatisée et commandée au moyen d'un robot (21), le robot (21) comprenant de préférence un bras de robot (25), de préférence à plusieurs axes, à l'extrémité libre duquel est disposée une buse de projection (17),
dans lequel, de préférence, le robot (21) est déplacé pour l'application au moyen d'un système de portique.

21. Procédé selon l'une des revendications 14 à 20,
**caractérisé en ce que**
a) les couches de mortier frais (4b) comprennent au moins un entraîneur d'air et/ou au moins un agent de rétention d'eau, par exemple de la méthylcellulose, et/ou au moins un agent épaississant et/ou au moins une poudre de dispersion et/ou au moins un agent hydrophobe et/ou au moins un régulateur de prise et/ou au moins un auxiliaire de dispersion et/ou au moins un plastifiant comme additif,
et/ou
b) les composants secs des couches de mortier frais (4b), sans les fibres courtes (7), comprennent une taille du grain maximale ≤ 0,6 mm, de préférence ≤ 0,4 mm, de manière particulièrement préférée ≤ 0,2 mm,
et/ou
c) les fibres courtes (7) sont ajoutées au moins partiellement, de préférence les fibres courtes orientées (7) sont ajoutées, par l'intermédiaire d'un dispositif d'ajout de fibres (18) sur la buse d'injection (17) dans le jet de mortier frais (26) sortant de la buse d'injection (17), un faisceau de fibres sans fin (24) étant de préférence amené par le dispositif d'ajout de fibres (18) et les fibres courtes (7) étant coupées de celui-ci et ajoutées dans le jet de mortier frais (26),
et/ou
d) le réglage de la composition, en particulier à partir des prémélanges, des couches de mortier frais (4b) est effectuer de manière automatisée et commandée.
